# EUROPÄISCHE PATENTSCHRIFT

(11) **EP 3 008 424 B1**
(45) Veröffentlichungstag und Bekanntmachung des Hinweises auf die Patenterteilung: **12.04.2017**
(21) Anmeldenummer: 14744025.9
(22) Anmeldetag: 18.07.2014
(51) Int. Cl.: G01D 5/20, G01D 7/00, G01V 3/10, G06Q 10/08, B65G 1/137

(54) **VORRICHTUNG UND VERFAHREN ZUR ÜBERWACHUNG EINES ZUGRIFFS AUF EINEN LAGERBEREICH EINER MEHRZAHL VON LAGERBEREICHEN FÜR WAREN**
DEVICE AND METHOD FOR MONITORING ACCESS TO ONE STORAGE REGION OF A PLURALITY OF STORAGE REGIONS FOR GOODS
DISPOSITIF ET PROCÉDÉ DE SURVEILLANCE D'UN ACCÈS À UNE ZONE DE STOCKAGE D'UNE PLURALITÉ DE ZONES DE STOCKAGE DE MARCHANDISES

(30) Priorität: 22.07.2013 DE 102013214283
(43) Veröffentlichungstag der Anmeldung: 20.04.2016
(73) Patentinhaber: Fraunhofer Gesellschaft zur Förderung der angewandten Forschung E.V., 80686 München (DE)
(72) Erfinder: DRÄGER, Tobias, 91083 Baiersdorf (DE); FISCHER, Roland, 91233 Kersbach (DE); MAYORDOMO, Iker, 91058 Erlangen (DE); GUNDELFINGER, Christine, 91338 Igensdorf (DE); HARTMANN, Markus, 92237 Sulzbach-Rosenberg (DE)
(74) Vertreter: Hersina, Günter
(86) Internationale Anmeldenummer: PCT/EP2014/065535
(87) Internationale Veröffentlichungsnummer: WO 2015/011056

(56) Entgegenhaltungen:
- EP-A2- 0 433 756
- WO-A1-94/16421
- WO-A1-2007/097752
- WO-A1-2009/046722
- FR-A1- 2 880 746

## Beschreibung

Ausführungsbeispiele der vorliegenden Erfindung beziehen sich auf eine Vorrichtung zur Überwachung eines Zugriffs auf einen Lagerbereich einer Mehrzahl von Lagerbereichen für Waren. Weitere Ausführungsbeispiele beziehen sich auf ein Verfahren zur Überwachung eines Zugriffs auf einen Lagerbereich einer Mehrzahl von Lagerbereichen für Waren. Manche Ausführungsbeispiele beziehen sich auf eine elektronische Kommissionierhilfe mit Bereichsüberwachung.

Kommissionierung ist die zentrale Funktion einer Logistik und hat signifikanten Einfluss auf andere Unternehmensbereiche wie Produktion oder Distribution. Unter der Kommissionierung wird ein Zusammenstellen von Einzelposten (Teilmengen) aufgrund von Anforderungen (Auftrag) aus einer Gesamtmenge (Sortiment) verstanden. Die Kommissionierung findet an verschiedenen Stellen in einer Logistikkette statt. So erfolgt beispielsweise innerbetrieblich eine Kommissionierung zwischen einem Lagerbereich und der Produktion, um eine optimale Bereitstellung von Material in einer Fertigung und Montage zu gewährleisten.

Aus den Schriften WO9416421 und WO2007097752 sind Techniken bekannt, die sich mit der Überwachung von Lagerbeständen befassen.

Beim Kommissionieren oder Sortieren von Waren und Gegenständen aus der Gesamtmenge (z.B. Lagerbestand) in Einzelposten wird auf Grund der komplexen Greifaufgabe bei einer Entnahme und einer Ablage zu kommissionierender Gegenstände auch in Hochlohnländern zumeist auf menschliches Personal zurückgegriffen.

Dabei wird aus der Gesamtmenge (Sortiment) von vielen unterschiedlichen Artikeln, welche in Lagerbereichen (Bereitstelleinheiten) gelagert werden, ein Einzelposten (Teilmenge, Entnahmeeinheit) entnommen und als eine neue Kombination entsprechend dem Auftrag erstellt.

Ein Kommissionierer handelt hierbei entsprechend der ihm zur Verfügung gestellten Auftragsdaten.

Dabei gibt es sowohl für die Informationsbereitstellung (d.h. was ist zu kommissionieren) als auch für die Fehlerüberwachung verschiedene Systeme.

Bei der Kommissionierung können wie bei allen manuellen Prozessen Fehler auftreten. Diese Fehler lassen sich beispielsweise in vier Fehlergruppen klassifizieren (Typfehler, Auslassungsfehler, Zustandsfehler und Mengenfehler).

Zur Unterstützung der Kommissionierung, d.h. der Vermeidung von Fehlern sowie einer Beschleunigung der Kommissionierung, können Vorgabesysteme eingesetzt werden, welche dem Kommissionierer anzeigen, aus welchem Lagerbereich (Entnahmeort) die Ware zu entnehmen ist. Die gemeinsame Schwäche der Vorgabesysteme ist die fehlende Überprüfung der gemachten Vorgaben.

Es ist ein System bekannt, bei dem der Kommissionierer einen RFID-Reader mit Antenne am Handgelenk in Form einer Uhr trägt. An den Lagerplätzen sind RFID-Transponder angebracht, welche der Kommissionierer jeweils für eine bestimmte Zeit, zur Bestätigung mit seiner "Uhr", sehr nahe kommen muss. Das System hat den entscheidenden Nachteil eines Eingriffs in den Kommissionierungsvorgang. Der Kommissionierer kann hier zwar Fehler reduzieren, muss aber spezielle nicht in seinem natürlichen Bewegungsablauf vorkommende Bewegungen ausführen.

Zusammenfassend greifen bekannte Lösungen in die Arbeitsabläufe bzw. in den persönlichen Komfort des Kommissionierers stark ein. Die Kommissionierer (ausführenden Personen) sind teilweise zur Einhaltung bzw. Erlernung eines bestimmten Handlungsablaufs verpflichtet, um die bereitgestellte technische Unterstützung bei ihren Aufgaben zu verwenden. Der damit einhergehende elektronische Aufbau bedarf auch einer Strukturänderung in der Lagerorganisation und macht Vorgaben für die räumliche Gestaltung des Lagerraums.

Der vorliegenden Erfindung liegt somit die Aufgabe zugrunde, ein Konzept zur Überwachung eines Kommissioniervorgangs zu schaffen, welches einen reduzierten Eingriff in die Arbeitsabläufe des Kommissionierers erfordert und gleichzeitig einfach in die vorhandene Lagerorganisation integriert werden kann.

Diese Aufgabe wird gelöst durch eine Vorrichtung zur Überwachung eines Zugriffs auf einen Lagerbereich einer Mehrzahl von Lagerbereichen für Waren gemäß Anspruch 1, einem Verfahren zur Überwachung eines Zugriffs auf einen Lagerbereich einer Mehrzahl von Lagerbereichen für Waren gemäß Anspruch 17 und ein Computerprogramm gemäß Anspruch 18.

Ausführungsbeispiele der vorliegenden Erfindung schaffen eine Vorrichtung zur Überwachung eines Zugriffs auf einen Lagerbereich einer Mehrzahl von Lagerbereichen für Waren. Die Vorrichtung weist eine Messsignalerzeugungseinrichtung, eine Erfassungseinrichtung und eine Auswerteeinrichtung auf. Die Messsignalerzeugungseinrichtung weist eine Signalquelle und eine Leiterschleifenanordnung auf, wobei die Leiterschleifenanordnung derart angeordnet ist, um aufgrund eines elektrischen Wechselstromsignals ein magnetisches Feld zu erzeugen, wobei jedem der Lagerbereiche zumindest eine Leiterschleife der Leiterschleifenanordnung zugeordnet ist, und wobei die Signalquelle ausgebildet ist, um jeder Leiterschleife der Leiterschleifenanordnung ein elektrisches Wechselstromsignal zuzuführen. Die Erfassungseinrichtung zur Erfassung des erzeugten magnetischen Feldes ist ausgebildet, um eine Messsignal basierend auf dem erfassten magnetischen Feld bereitzustellen. Die Auswerteeinrichtung zur Auswertung des Messsignals ist ausgebildet, um basierend auf dem Messsignal einen Zugriff auf einen der Lagerbereiche zu ermitteln, um einen ermittelten Zugriff mit einem Sollzugriff zu vergleichen, und um basierend auf dem Vergleich ein Anzeigesignal auszugeben.

Weitere Ausführungsbeispiele schaffen ein Verfahren zur Überwachung eines Zugriffs auf einen Lagerbereich einer Mehrzahl von Lagerbereichen für Waren. Dabei ist jedem Lagerbereich zumindest eine Leiterschleife einer Leiterschleifenanordnung zugeordnet, wobei die Leiterschleifenanordnung derart angeordnet ist, um aufgrund eines elektrischen Wechselstromsignals ein magnetisches Feld zu erzeugen. Das Verfahren umfasst Zuführen eines elektrischen Wechselstromsignals zu jeder Leiterschleife der Leiterschleifenanordnung, um das magnetische Feld zu erzeugen. Das Verfahren umfasst ferner Erfassen des magnetischen Feldes und Bereitstellen eines Messsignals basierend auf dem erfassten magnetischen Feld. Das Verfahren umfasst ferner Auswerten des bereitgestellten Messsignals, um basierend auf dem Messsignal einen Zugriff auf einen der Lagerbereiche zu ermitteln, um einen ermittelten Zugriff mit einem Sollzugriff zu vergleichen, und um basierend auf dem Vergleich ein Anzeigesignal auszugeben.

Die vorliegende Erfindung nutz den Effekt, dass eine von einem Strom durchflossene Leiterschleife ein magnetisches Feld erzeugt, welches von einer Erfassungseinrichtung (z.B. einer Messspule) erfasst werden kann, um einen Zugriff auf einen Lagerbereich einer Mehrzahl von Lagerbereichen zu überwachen, indem jedem der Lagerbereiche zumindest eine Leiterschleife zugeordnet wird und jeder der Leiterschleifen ein (charakteristisches) Wechselstromsignal zugeführt wird.

Bei einem Zugriff auf einen der Lagerbereiche erfasst die Erfassungseinrichtung das Magnetfeld, welches durch die Leiterschleife erzeugt wird, die dem Lagerbereich zugeordnet ist, und stellt basierend auf dem erfassten magnetischen Feld ein Messsignal zur Verfügung, basierend auf dem die Auswerteeinrichtung den Zugriff auf den Lagerbereich überwachen kann.

Bei Ausführungsbeispielen kann die Erfassungseinrichtung beispielsweise eine Messspule aufweisen, in die eine Spannung durch das von der Leiterschleife erzeugte magnetische Feld induziert wird. Anhand einer Phasenlage der in die Messspule induzierten Spannung kann ein Zugriff auf einen der Lagerbereiche ermittelt bzw. überprüft werden.

Beispielsweise kann anhand der Phasenlage erkannt werden, ob mit der Erfassungseinrichtung eine Leiterschleife durchquert wurde oder nicht, oder mit anderen Worten, ob eine Fläche (oder Ebene bzw. Öffnungsebene), die durch die Leiterschleife aufgespannt wird und durch die Leiterschleife räumlich begrenzt wird, mit der Erfassungseinrichtung durchdrungen bzw. passiert worden ist oder nicht. Somit kann anhand der Phasenlage ermittelt werden, ob der Kommissionierer (an dessen Hand bzw. Arm die Erfassungseinrichtung befestigt sein kann) in den (richtigen) Lagerbereich, der der Leiterschleife zugeordnet ist (bzw. der von der Leiterschleife umfasst wird), gegriffen hat. Ferner kann anhand der Phasenlage ermittelt werden, ob der Kommissionierer nicht in den (richtigen) Lagerbereich gegriffen hat, d.h. danebengegriffen bzw. in einen anderen (falschen) Lagerbereich gegriffen hat.

Darüber hinaus kann anhand der Phasenlage erkannt werden, ob die Erfassungseinrichtung eine Leiterschleife oder einen Teil bzw. Abschnitt der Leiterschleife überquert hat. Überqueren bezieht sich dabei auf eine Bewegung der Erfassungseinrichtung entlang einer Bewegungsrichtung oder Trajektorie, die die Ebene, die durch die durch die Leiterschleife aufgespannt wird, nicht schneidet, z.B. auf eine Bewegung entlang einer Bewegungsrichtung oder Trajektorie, die im Wesentlichen parallel zu der Ebene verläuft.

Wenn die Leiterschleife einen Lagerbereich für Waren umfasst bzw. umschließt und die Erfassungseinrichtung eine Messspule zur Erfassung des durch die Leiterschleife erzeugten magnetischen Feldes aufweist und an einer Hand oder einem Arm des Kommissionierers befestigt ist, dann kann eine Aussage darüber getroffen werden, ob die Erfassungseinrichtung einen Teil der Leiterschleife, die dem Lagerbereich zugeordnet ist, überquert hat und damit ein Zugriff auf diesen Lagerbereich stattgefunden hat oder nicht.

Somit kann der Kommissionierer während seiner Tätigkeit unmittelbare Rückmeldung über den korrekten Prozessablauf bezüglich Entnahmeort und eventuell Abgabeort der Waren erhalten. Dadurch kann eine Fehlkommissionierung erkannt und noch vor Vollendung des Kommissionierungsprozesses signalisiert werden. Das Anzeigesignal kann ein optisches, akustisches oder haptisch-/mechanisches sein. Die Signalisierung kann derart erfolgen, dass sie nicht den eigentlichen Prozessablauf ändert oder stört. Wird kein Fehler detektiert, vergisst der Kommissionierer im Idealfall das Vorhandensein der Vorrichtung zur Überwachung eines Zugriffs auf einen Lagerbereich einer Mehrzahl von Lagerbereichen für Waren.

Ferner kann die Position der Erfassungseinrichtung (oder eines Mobilteils, das die Erfassungseinrichtung aufweist) gegenüber dem stromdurchflossenen Leiter bzw. der stromdurchflossenen Leiterschleife absolut bestimmt werden. Dadurch ist es möglich, exakte Positionsauswertungen auf funktechnischer Basis durchzuführen ohne dass weitere Referenzsignale nötig sind. Insbesondere kann dies genutzt werden, um beim Kommissionieren zu überprüfen, ob der Kommissionierer in den richtige Lagerbereich gegriffen hat oder nicht.

Ausführungsbeispiele der vorliegenden Erfindung werden bezugnehmend auf die beiliegenden Figuren näher erläutert. Es zeigen:
- Fig. 1: ein schematisches Blockschaltbild einer Vorrichtung zur Überwachung eines Zugriffs auf einen Lagerbereich einer Mehrzahl von Lagerbereichen für Waren, gemäß einem Ausführungsbeispiel;
- Fig. 2: eine schematische Ansicht der in Fig. 1 gezeigten Vorrichtung zur Überwachung eines Zugriffs auf einen Lagerbereich einer Mehrzahl von Lagerbereichen für Waren, gemäß einem Ausführungsbeispiel;
- Fig. 3: ein Flussdiagram der Funktionsweise der in Fig. 1 und 2 gezeigten Vorrichtung zur Überwachung eines Zugriffs auf einen Lagerbereich einer Mehrzahl von Lagerbereichen für Waren, gemäß einem Ausführungsbeispiel;
- Fig. 4a: eine schematische Ansicht eines stromdurchflossenen Leiters und Feldlinien eines magnetischen Feldes, das durch den stromdurchflossenen Leiter erzeugt wird;
- Fig. 4b: in einem Diagramm für vier verschiedene Stromstärken vier Amplitudenverläufe magnetischer Feldstärken eines magnetischen Feldes, das durch den stromdurchflossenen Leiter erzeugt wird, in Abhängigkeit von einem Abstand zu dem stromdurchflossenen Leiter;
- Fig. 4c: in einem Diagramm einen Amplitudenverlauf und einen Phasenverlauf einer magnetischen Feldstärke eines magnetischen Feldes, das durch den stromdurchflossenen Leiter erzeugt wird, in Abhängigkeit von einem Abstand zu dem stromdurchflossenen Leiter;
- Fig. 4d: eine schematische Ansicht des stromdurchflossenen Leiters, Feldlinien eines magnetischen Feldes, das durch den stromdurchflossenen Leiter erzeugt wird, und Feldkomponenten in x- und z-Richtung an einer vorgegebenen Position relativ zu dem stromdurchflossenen Leiter;
- Fig. 4e: eine schematische Ansicht des stromdurchflossenen Leiters, Feldlinien eines magnetischen Feldes, das durch den stromdurchflossenen Leiter erzeugt wird, eine Messspule zur Erfassung einer ersten Komponente des magnetischen Feldes und eine Referenzspule zur Erfassung einer zweiten Komponente des magnetischen Feldes;
- Fig. 4f: eine schematische Ansicht des stromdurchflossenen Leiters, Feldlinien des magnetischen Feldes, das durch den stromdurchflossenen Leiter erzeugt wird, sowie in einem ersten Diagramm einen Verlauf einer an einer ersten Position der Messspule relativ zu dem stromdurchflossenen Leiter in die Messspule induzierten Spannung aufgetragen über die Zeit, und in einem zweiten Diagramm einen Verlauf einer an einer zweiten Position der Messspule relativ zu dem stromdurchflossenen Leiter in die Messspule induzierten Spannung aufgetragen über die Zeit;
- Fig. 5a: eine schematische Ansicht einer Anordnung einer Leiterschleife, gemäß einem Ausführungsbeispiel;
- Fig. 5b: eine schematische Ansicht einer 8-förmigen Anordnung einer Leiterschleife, gemäß einem Ausführungsbeispiel;
- Fig. 5c: eine schematische Ansicht einer meanderförmigen Anordnung einer Leiterschleife, gemäß einem Ausführungsbeispiel;
- Fig. 5d: eine schematische Ansicht einer schachbrettförmiger Anordnung einer Leiterschleife, gemäß einem Ausführungsbeispiel;
- Fig. 5e: eine schematische Ansicht von sechs Lagerbereichen und einer Leiterschleifenanordnung mit fünf Leiterschleifen zur Überwachung der sechs Lagerbereiche, gemäß einem Ausführungsbeispiel;
- Fig. 6a: eine schematische Ansicht einer Leiterschleifenanordnung mit vier Leiterschleifen zur Überwachung von vier Lagerbereichen, gemäß einem Ausführungsbeispiel; und
- Fig. 6b: eine schematische Ansicht von drei Leiterschleifen und einer Erfassungseinrichtung eines Mobilteils, die eine Messspule aufweist, gemäß einem Ausführungsbeispiel.

In der nachfolgenden Beschreibung der Ausführungsbeispiele der Erfindung werden in den Figuren gleiche oder gleichwirkende Elemente mit den gleichen Bezugszeichen versehen, so dass deren Beschreibung in den unterschiedlichen Ausführungsbeispielen untereinander austauschbar ist.

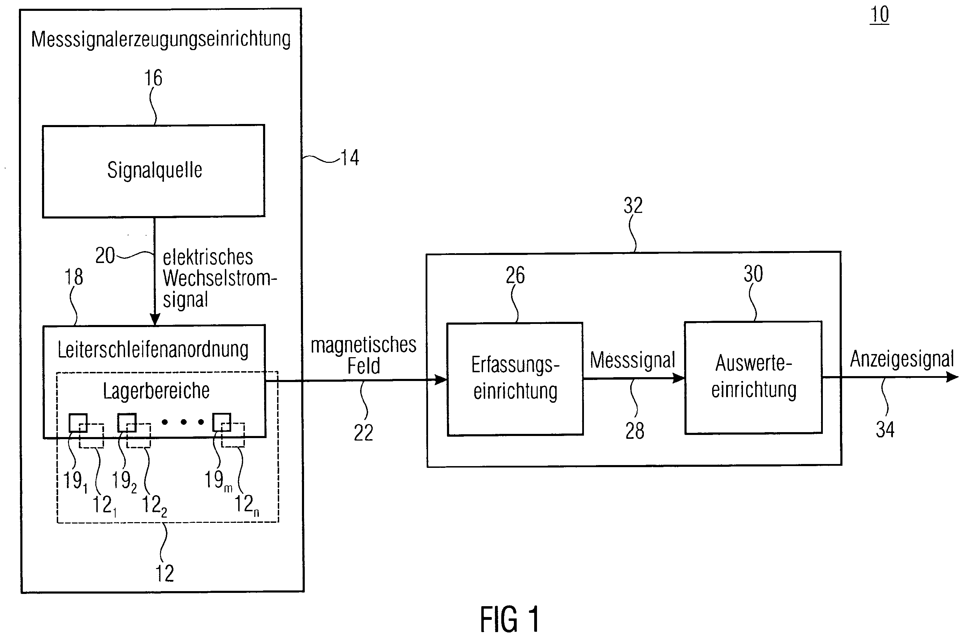

Fig. 1 zeigt ein schematisches Blockschaltbild einer Vorrichtung 10 zur Überwachung eines Zugriffs auf einen Lagerbereich einer Mehrzahl von Lagerbereichen 12 für Waren. Die Vorrichtung 10 weist eine Messsignalerzeugungseinrichtung 14, eine Erfassungseinrichtung 26 und eine Auswerteeinrichtung 30 auf.

Die Messsignalerzeugungseinrichtung 14 weist eine Signalquelle 16 und eine Leiterschleifenanordnung 18 mit einer Mehrzahl von Leiterschleifen 19₁ bis 19ₘ auf, wobei die Leiterschleifenanordnung 18 angeordnet ist, um aufgrund eines elektrischen Wechselstromsignals 20 ein magnetisches Feld 22 zu erzeugen, wobei jedem der Lagerbereiche 12₁ bis 12ₙ zumindest eine der Leiterschleifen 19₁ bis 19ₘ der Leiterschleifenanordnung 18 zugeordnet ist, und wobei die Signalquelle 16 ausgebildet ist, um jeder Leiterschleife 19₁ bis 19ₘ der Leiterschleifenanordnung 18 ein elektrisches Wechselstromsignal 20 zuzuführen.

Die Erfassungseinrichtung 26 zur Erfassung des erzeugten magnetischen Feldes 22 ist ausgebildet, um ein Messsignal 28 basierend auf dem erfassten magnetischen Feld 22 bereitzustellen.

Die Auswerteinrichtung 30 zum Auswerten des Messsignals 28 ist ausgebildet, um basierend auf dem Messsignal 28 einen Zugriff auf einen der Lagerbereiche 12 zu ermitteln, um einen ermittelten Zugriff mit einem Sollzugriff zu vergleichen, und um basierend auf dem Vergleich ein Anzeigesignal 34 auszugeben.

Bei Ausführungsbeispielen kann die Vorrichtung 10 bis zu n Lagerbereiche 12₁ bis 12ₙ überwachen, wobei n eine natürliche Zahl größer gleich eins ist, n ≥ 1. Hierzu kann die Vorrichtung 10 eine Leiterschleifenanordnung 18 mit bis zu m Leiterschleifen 19₁ bis 19ₘ aufweisen, wobei m eine natürliche Zahl größer gleich eins ist, m ≥ 1, wobei jedem der Lagerbereiche 12₁ bis 12ₙ zumindest eine der Leiterschleifen 19₁ bis 19ₘ zugeordnet sein kann.

Bei Ausführungsbeispielen können zumindest zwei der Leiterschleifen 19₁ bis 19ₘ der Leiterschleifenanordnung 18 unterschiedliche Wechselstromsignale zugeordnet sein.

Beispielsweise kann die Signalquelle 16 ausgebildet sein, um jeder der Leiterschleifen 19₁ bis 19ₘ ein spezifisches bzw. charakteristisches elektrisches Wechselstromsignal 20 zuführen. Durch die spezifischen bzw. charakteristischen elektrischen Wechselstromsignale 20 können spezifische bzw. charakteristische magnetische Felder 22 erzeugt werden, welche durch ihre Signalformen (z.B. von der Auswerteeinrichtung 30) voneinander unterschieden werden können.

Mit anderen Worten, jedem der Lagerbereiche 12₁ bis 12ₙ kann zumindest eine der Leiterschleifen 19₁ bis 19ₘ der Leiterschleifenanordnung 18 zugeordnet werden, wobei jede der Leiterschleifen 19₁ bis 19ₘ ein spezifisches elektrisches Wechselstromsignal 20 von der Signalquelle 16 erhält. Dieses spezifische elektrische Wechselstromsignal 20 erzeugt ein spezifisches magnetisches Feld 22. D.h. das erzeugte magnetisches Feld 22 ist von dem spezifischen, der jeweiligen Leiterschleife zugeordneten elektrischen Wechselstromsignal 20 abhängig. Dadurch lässt sich ein magnetisches Feld 22 einer der Leiterschleifen 19₁ bis 19ₘ und somit einem der Lagerbereiche 12₁ bis 12ₙ zuordnen.

Wie in Fig. 1 zu erkennen ist, kann die Vorrichtung 10 ein Mobilteil 32 aufweisen, welches die Erfassungseinrichtung 26 und die Auswerteeinrichtung 30 umfasst. Mit anderen Worten, die Erfassungseinrichtung 26 und die Auswerteeinrichtung 30 können in einem Mobilteil 32 integriert oder implementiert werden.

Ferner ist es möglich, dass das Mobilteil 32 die Erfassungseinrichtung 26 aufweist, während die Auswerteeinrichtung 30 in einer (externen) Einheit implementiert wird. Dabei kann das Messsignal 28 von der Erfassungseinrichtung 26 zu der Auswerteeinrichtung 30 über eine kabelgebundene Verbindung (z.B. über ein elektrisches oder optisches Kabel) oder eine kabellose Verbindung (z.B. über eine Funkverbindung oder Infrarotverbindung) übertragen werden.

Bei Ausführungsbeispielen kann das Anzeigesignal 34 angeben, ob der ermittelte Zugriff und der Sollzugriff übereinstimmen. Ferner kann das Anzeigesignal 34 angeben, ob der ermittelte Zugriff und der Sollzugriff nicht übereinstimmen. Selbstverständlich kann das Anzeigesignal 34 auch beides angeben, ob der ermittelte Zugriff und der Sollzugriff übereinstimmen oder nicht-übereinstimmen.

Dabei kann das Anzeigesignal 34 einen ersten Zustand anzeigen, wenn der Vergleich ergibt, dass der Sollzugriff und der erfasste Zugriff übereinstimmen, und/oder einen zweiten Zustand anzeigen, wenn der Vergleich ergibt, dass der Sollzugriff und der erfasste Zugriff nicht übereinstimmen.

Das Anzeigesignal 34 kann in beliebiger Form ausgegeben werden. Beispielsweise kann die Vorrichtung 10 eine optische Anzeigeeinheit aufweisen, die den ersten Zustand und/oder den zweiten Zustand anzeigen kann. Beispielsweise kann die optische Anzeigeeinheit den ersten Zustand durch eine erste Farbe (z.B. grün) und/oder den zweiten Zustand durch eine zweite Farbe (z.B. rot) anzeigen. Ferner kann die Vorrichtung 10 eine Anzeigeeinheit aufweisen, die ausgebildet sein kann, um das Anzeigesignal 34 akustisch, haptisch und/oder mechanisch anzuzeigen. Dabei ist es auch möglich nur bestimmte Ereignisse, wie z.B. Fehlzugriffe, anzuzeigen.

Die Anzeigeeinheit kann am Mobilteil 32 angeordnet sein. Das Anzeigesignal 34 kann ferner (z. B. durch eine externe Datenverarbeitungseinrichtung) weiterverarbeitet und/oder gespeichert werden, um z.B. eine statistische Auswertung vornehmen zu können.

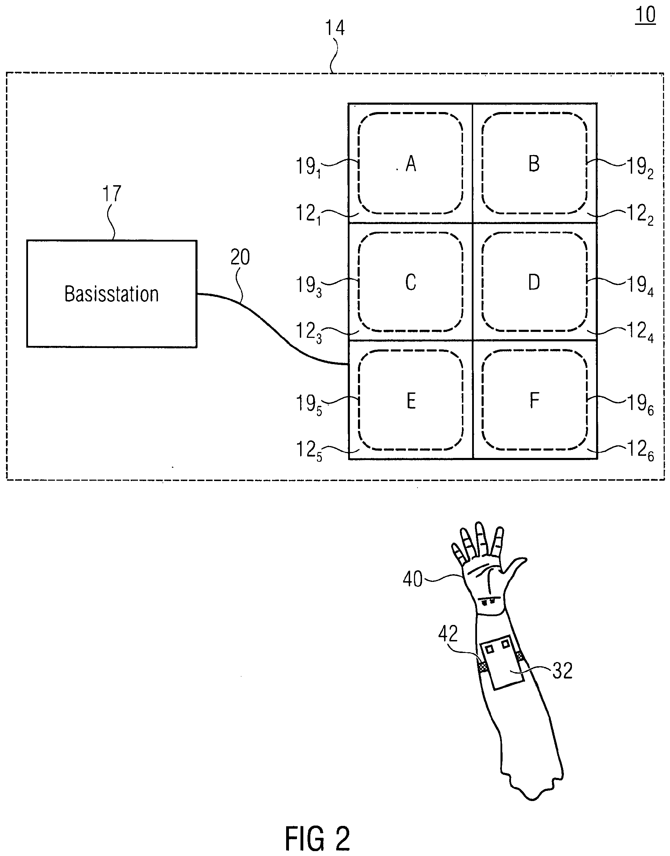

Fig. 2 zeigt eine schematische Ansicht der in Fig. 1 gezeigten Vorrichtung 10 zur Überwachung eines Zugriffs auf einen Lagerbereich einer Mehrzahl von Lagerbereichen 12 für Waren. Die Leiterschleifenanordnung 18 weist beispielhaft sechs Leiterschleifen 19₁ bis 19ₘ (m = 6) zur Überwachung von sechs Lagerbereichen (z.B. Fächer) 12₁ bis 12ₙ (n = 6) auf. Die sechs Lagerbereiche 12₁ bis 12ₙ (n = 6) sind in Fig. 2 mit "A" bis "F" gekennzeichnet.

Es sei jedoch darauf hingewiesen, dass bei Ausführungsbeispielen die Leiterschleifenanordnung 18 bis zu m Leiterschleifen 19₁ bis 19ₘ aufweisen kann, wobei m eine natürliche Zahl größer gleich eins ist, m ≥ 1. Dabei kann jedem zu überwachenden Lagerbereich der Mehrzahl von Lagerbereichen 12₁ bis 12ₙ zumindest eine der Leiterschleifen 19₁ bis 19ₘ zugeordnet bzw. zugewiesen sein, z.B. indem die zumindest eine Leiterschleife den entsprechenden Lagerbereich umgibt bzw. umfasst.

In Fig. 2 ist jeweils eine Leiterschleife der sechs Leiterschleifen 19₁ bis 19ₘ (m = 6) einem Lagerbereich der sechs Lagerbereiche 12₁ bis 12ₙ (n = 6) zugeordnet. Die Leiterschleifen 19₁ bis 19ₘ (m = 6) können dabei um die Lagerbereiche (z.B. Fächer) 12₁ bis 12ₙ (n = 6) herum angeordnet sein.

Beispielsweise ist eine erste Leiterschleife 19₁ der sechs Leiterschleifen 19₁ bis 19ₘ (m = 6) einem ersten Lagerbereich 12₁ der sechs Lagerbereiche 12₁ bis 12ₙ (n = 6) zugeordnet, während eine zweite Leiterschleife 19₂ der sechs Leiterschleifen 19₁ bis 19ₘ (m = 6) einem zweiten Lagerbereich 12₂ der sechs Lagerbereiche 12₁ bis 12ₙ (n = 6) zugeordnet ist.

Die Vorrichtung 10 kann ferner eine Basisstation 17 aufweisen, die die Signalquelle 16 (siehe Fig. 1) umfasst, und ausgebildet ist, um ein oder mehrere Wechselstromsignale 20 mit einer Frequenz fg für die sechs Leiterschleifen 19₁ bis 19ₘ (m = 6) zu erzeugen. Beispielsweise kann die Signalquelle 16 (der Basisstation 17) ausgebildet sein, um sechs (charakteristische bzw. spezifische) Wechselstromsignale für die sechs Leiterschleifen 19₁ bis 19ₘ (m = 6) der Leiterschleifenanordnung 18 zu erzeugen, so dass jede der sechs Leiterschleifen 19₁ bis 19ₘ (m = 6) ein Wechselstromsignal der sechs Wechselstromsignale erhält.

Das Mobilteil 32 (oder Empfängersystem) kann an einem Arm 40 des Kommissionierers (oder Bedieners) angeordnet sein. Ferner kann die Vorrichtung 10 eine Anzeigevorrichtung bzw. Signalisierungsvorrichtung 42 aufweisen, die z.B. mit dem Mobilteil 32 verbunden sein kann.

Wie in Fig. 2 gezeigt ist, kann das Mobilteil 32 an einem Arm 40 der kommissionierenden Person befestigt sein, so dass das Mobilteil 32 beim Greifen der Ware aus einem der Lagerbereiche 12 oder Ablegen der Ware in einen der Lagerbereiche 12 möglichst in der Nähe des entsprechenden Lagerbereichs positioniert ist und das magnetische Feld, welches durch die Leiterschleife der Leiterschleifenanordnung 18, die dem entsprechenden Lagerbereich zugeordnet ist, erfasst. Hierzu kann das Mobilteil 32 z.B. als Armbanduhr ausgeführt sein, oder in einen Handschuh oder ein Kleidungsstück der ausführenden Person integriert sein.

Die Vorrichtung 10 zur Überwachung eines Zugriffs auf einen Lagerbereich einer Mehrzahl von Lagerbereichen 12 für Waren kann ausgebildet sein, um ein Hineingreifen in zumindest einen Lagerbereich der Lagerbereiche 12₁ bis 12ₙ (n = 6) zu überprüfen. Bei dem Hineingreifen in den zumindest einen Lagerbereich der Lagerbereiche 12₁ bis 12ₙ (n = 6) wird die Leiterschleife, die dem zumindest einen Lagerbereich der Lagerbereiche 12₁ bis 12ₙ (n = 6) zugeordnet ist, zusammen mit der Erfassungseinrichtung 26 durchquert bzw. durchgriffen. Die Lagerbereiche 12₁ bis 12ₙ (n = 6) können z.B. Fächer eines Regals sein, wobei zumindest einem der Lagerbereiche (z.B. einem der Fächer) eine Leiterschleife derart zugeordnet wird, dass diese bei einem Zugriff auf den Lagerbereich (z.B. das Fach) durchquert bzw. durchgriffen wird. Hierzu kann die Leiterschleife beispielsweise um eine Lagerbereichsöffnung (z.B. Fachöffnung), durch welche hindurch der Zugriff auf den Lagerbereich (z.B. das Fach) erfolgt, herum angeordnet sein bzw. diese umfassen. Die Vorrichtung 10 kann dabei den Zugriff auf den Lagerbereich überprüfen, indem sie ermittelt, ob der Kommissionierer zusammen mit der Erfassungseinrichtung 26 in den richtigen Lagerbereich gegriffen hat und dabei die Leiterschleife durchquert bzw. durchgriffen hat, die dem Lagerbereich zugeordnet ist, oder ob der Kommissionierer danebengegriffen und somit in einen anderen der Lagerbereiche 12₁ bis 12ₙ (n = 6) gegriffen hat. Sind den anderen Lagerbereichen ebenfalls Leiterschleifen zugeordnet, kann die Vorrichtung 10 darüber hinaus ermitteln, in welchen der Lagerbereiche 12₁ bis 12ₙ (n = 6) der Kommissionierer fälschlicherweise gegriffen hat.

Beispielsweise kann sich die zu kommissionierende Ware in dem dritten Lagerbereich 12₃ befinden. In diesem Fall entspricht der Sollzugriff einem Zugriff auf den dritten Lagerbereich 12₃. Zur Überprüfung des Zugriffs auf den dritten Lagerbereich 12₃ kann diesem die dritte Leiterschleife 19₃ derart zugeordnet sein, dass diese bei einem Zugriff auf den dritten Lagerbereich 12₃ durchquert bzw. durchgriffen wird. Die Vorrichtung 10 kann einen Zugriff auf den dritten Lagerbereich 12₃ somit überprüfen, indem sie ermittelt, ob die Erfassungseinrichtung 26 die dritte Leiterschleife 19₃ durchquert und der Kommissionierer somit in den dritten Lagerbereich 12₃ gegriffen hat, oder ob die Erfassungseinrichtung 26 die dritte Leiterschleife 19₃ nicht durchquert und der Kommissionierer somit in einen anderen der Lagerbereiche 19₁ bis 19₂ und 19₄ bis 19ₙ (n = 6) gegriffen hat. Sind den anderen Lagerbereichen 19₁ bis 19₂ und 19₄ bis 19ₙ (n = 6) ebenfalls Leiterschleifen zugeordnet, kann die Vorrichtung 10 darüber hinaus ermitteln, in welchen der Lagerbereiche 19₁ bis 19₂ und 19₄ bis 19ₙ (n = 6) der Kommissionierer fälschlicherweise gegriffen hat.

Es sei darauf hingewiesen, dass zumindest eine Leiterschleife einem Lagerbereich der Lagerbereiche 12₁ bis 12ₙ (n = 6) auch derart zugeordnet sein kann, dass die Leiterschleife bei einem Zugriff auf den Lagerbereich nicht durchquert sondern überquert wird. Hierzu kann die Leiterschleife beispielsweise an einem Boden der Lagerbereiche (z.B. Fächer) angeordnet sein. Dabei kann die Vorrichtung 10 den Zugriff auf den Lagerbereich überprüfen, indem sie ermittelt, ob der Kommissionierer zusammen mit der Erfassungseinrichtung 26 die Leiterschleife überquert und somit in den richtigen Lagerbereich gegriffen hat, oder ob der Kommissionierer zusammen mit der Erfassungseinrichtung 26 die Leiterschleife nicht überquert und somit danebengegriffen und in einen anderen der Lagerbereiche 12₁ bis 12ₙ (n = 6) gegriffen hat. Sind den anderen Lagerbereichen ebenfalls Leiterschleifen zugeordnet, kann die Vorrichtung 10 darüber hinaus ermitteln, in welchen der Lagerbereiche 12₁ bis 12ₙ (n = 6) der Kommissionierer fälschlicherweise gegriffen hat.

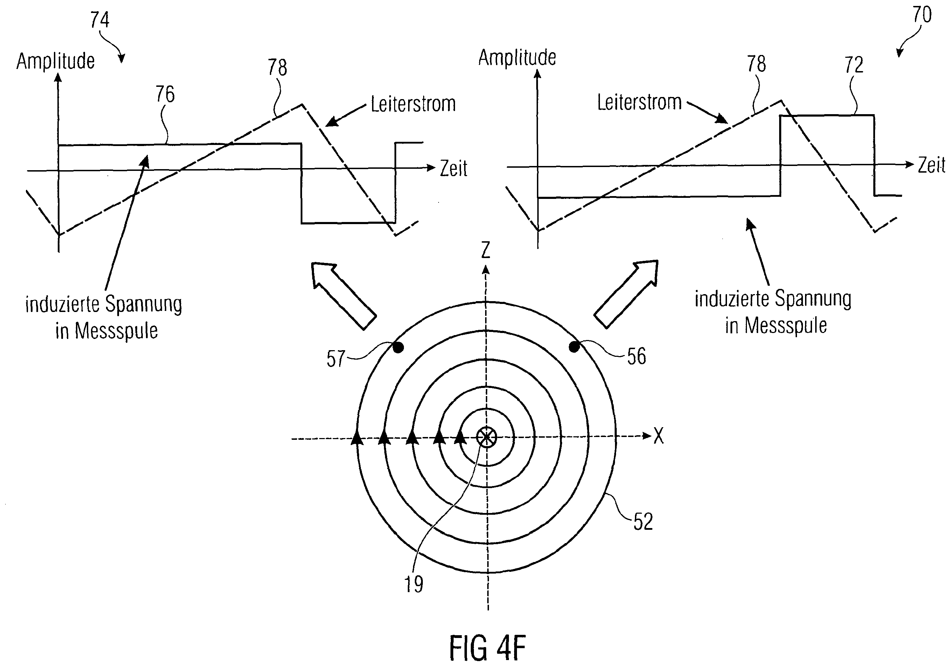

Mit anderen Worten, die Vorrichtung (z.B. System) 10 umfasst mindestens eine Basisstation 17, eine oder mehreren Leiterschleifen 19₁ bis 19ₘ und mindestens ein Empfängersystem 32. Behälter, Stellplätze oder Regale 12₁ bis 12ₙ mit der zu kommissionierenden Ware werden mit einer Leiterschleife 19₁ bis 19ₘ so umgeben, dass bei einem Stromfluss durch die Leiterschleife 19₁ bis 19ₘ ein magnetisches Wechselfeld 22 in dem Lagerbereich 12₁ bis 12ₙ entsteht, der für den Teilprozess überwacht und gegenüber anderen Lagerbereichen 12₁ bis 12ₙ abgegrenzt werden soll. Das magnetische Wechselfeld 22 kann dabei durch eine unsymmetrische Signalform (unsymmetrischer Stromverlauf) mit einer Grundfrequenz f_{g} erzeugt werden (siehe Fig. 4f). Zur weiteren Unterscheidung, aber auch zur Datenübertragung kann dieses felderzeugende Signal mit einem geeigneten Verfahren (Amplituden-, Frequenz- oder Phasenmodulation) moduliert werden. Dadurch ist eine Unterscheidungsmöglichkeit zwischen verschiedenen Leiterschleifen 19₁ bis 19ₘ mit verschieden modulierten Signalen gegeben. Das Signal durch die Leiterschleife 19₁ bis 19ₘ wird von der dazugehörenden Basisstation erzeugt. Fig. 2 zeigt beispielhaft einen solchen Aufbau an einem Regal.

Dringt die kommissionierende Person mit dem Mobilteil (Empfängersystem) 32 während des Kommissionierprozesses in einen vom System 10 mittels Magnetfeld 22 überwachten Lagerbereich 12₁ bis 12ₙ ein, so wird das von der Basisstation 17 über die Leiterschleife 19₁ bis 19ₘ gesendete Überwachungssignal von dem Empfängersystem 32 detektiert und verarbeitet. Das Empfängersystem 32 kann dazu z.B. als Armbanduhr ausgeführt sein, oder in einen Handschuh oder eine Kleidung der ausführenden Person integriert sein (siehe Fig. 2). Nach Empfang und Auswertung des Überwachungssignals kann das Empfängersystem 32 der Bedienperson die Korrektheit oder Fehlerhaftigkeit der durchgeführten Aktion im überwachten Lagerbereich 12₁ bis 12ₙ optisch, akustisch oder mechanisch signalisieren. Dazu kann ein vorheriges anlernen des Systems 10 oder eine Datenverbindung zu einer Prozessüberwachung eingesetzt werden.

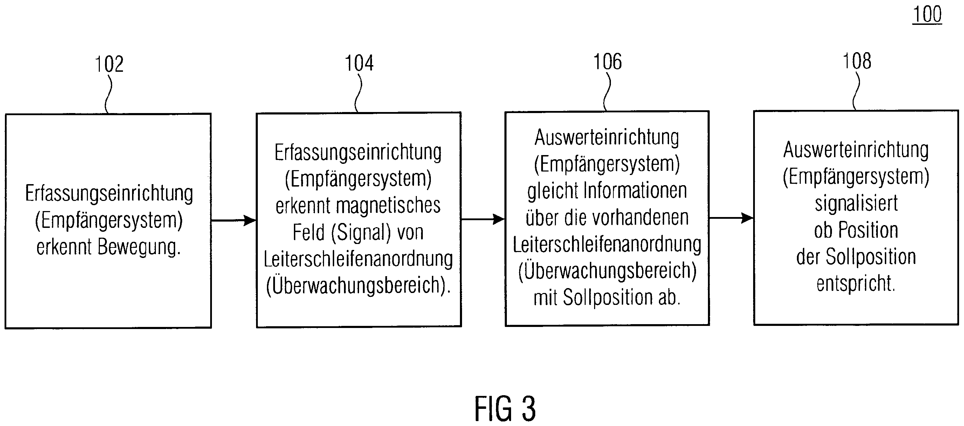

Fig. 3 zeigt ein Flussdiagram 100 der Funktionsweise der in Fig. 1 und 2 gezeigten Vorrichtung 10 zur Überwachung eines Zugriffs auf einen Lagerbereich einer Mehrzahl von Lagerbereichen 12 für Waren.

In einem ersten Schritt 102 kann das Mobilteil (oder Empfängersystem) 32 eine Bewegung erkennen. Die Erkennung der Bewegung kann z.B. mittels eines Sensors, wie z.B. einem Vibrationssensor, Bewegungssensor und/oder Inertialsensor, erfolgen. Dabei kann der Sensor an seinem Ausgang ein Sensorsignal bereitstellen, durch welches eine Bewegung des Mobilteils 32 und somit ein Greifen oder Ablegen von Waren in einem Lagerbereich 12₁ bis 12ₙ der Mehrzahl von Lagerbereichen 12 erfasst werden kann. Das Sensorsignal kann beispielsweise eine Beschleunigung oder Bewegungsrichtung anzeigen, wodurch die Bewegung des Mobilteils 32 erkannt werden kann.

In einem zweiten Schritt 104 kann die Erfassungseinrichtung 26 des Mobilteils 32 das magnetische Feld 22 einer Leiterschleife 19₁ bis 19ₘ der Leiterschleifenanordnung 18, welches einem der Lagerbereiche 12₁ bis 12ₙ zugeordnet ist, erkennen und ein entsprechendes Messsignal 28 bereitstellen. Wie bereits erwähnt, kann jede Leiterschleife 19₁ bis 19ₘ der Leiterschleifenanordnung 18 ein spezifisches magnetisches Feld 22 erzeugen, welches durch die Erfassungseinrichtung 26 erfasst und in ein entsprechendes spezifisches Messesignal 28 gewandelt werden kann.

In einem dritten Schritt 106 kann die Auswerteeinrichtung 30 des Mobilteils 32 Informationen über die vorhandene Leiterschleifenanordnung 18 (Überwachungsbereich) mit einer Sollposition abgleichen. Wie bereits erwähnt, kann die Auswerteinrichtung 30 aufgrund des Messsignals 28 den Zugriff zu einem der Lagerbereiche 12₁ bis 12ₙ detektieren. Hierzu kann die Auswerteinrichtung 30 das Messsignal 28 analysieren, um festzustellen, von welcher Leiterschleife 19₁ bis 19ₘ der Leiterschleifenanordnung 18 das magnetische Feld 22 stammt, welches durch die Erfassungseinrichtung 26 erfasst wurde. Die Auswerteinrichtung 30 entscheidet, abhängig vom Messsignal 28, innerhalb oder außerhalb welcher der Leiterschleifen 19₁ der 19ₘ der Leiterschleifenanordnung 18 sich die Erfassungseinrichtung 26 befindet bzw. welche der Leiterschleifen 19₁ der 19ₘ von der Erfassungseinrichtung 26 überquert wurden. Somit kann die Auswerteinrichtung 30 die Position der Erfassungseinrichtung 26 gegenüber den Leiterschleifen 19₁ der 19ₘ der Leiterschleifenanordnung 18 und damit gegenüber den Lagerbereichen 12₁ bis 12ₙ ermitteln.

In einem vierten Schritt 108 kann die Auswerteeinrichtung 30 des Mobilteils bzw. Empfängersystems 32 signalisieren, ob die Position des Mobilteils 32 der Sollposition entspricht. Hierzu kann die Auswerteinrichtung 30 ausgebildet sein, um den ermittelten Zugriff auf den Lagerbereich 12₁ bis 12ₙ mit einem Sollzugriff zu vergleichen, und um basierend auf dem Vergleich ein Anzeigesignal 34 auszugeben, wobei das Anzeigesignal 34 anzeigen kann, ob der ermittelte Zugriff und der Sollzugriff übereinstimmen oder nicht übereinstimmen, d.h. ob die Ware aus dem richtigen Lagerbereich 12₁ bis 12ₙ der Mehrzahl von Lagerbereichen 12 entnommen bzw. in den richtigen Lagerbereich 12₁ bis 12ₙ der Mehrzahl von Lagerbereichen 12 abgelegt wurde.

Darüber hinaus ist es möglich, z.B. mit Bewegungsdetektoren im Mobilteil 32, eine Bewegung zu detektieren und die Position des Mobilteils 32 ferner basierend auf der detektierten Bewegung zu ermitteln bzw. zu bestimmen. Beispielsweise kann ausgehend von einem bekannten Startpunkt und der detektierten Bewegung, die z.B. anhand von Richtungen entlang eines vorgegebenen Koordinatensystems beschrieben werden kann, eine aktuelle Position des Mobilteils 32 berechnet werden. Somit stehen der Auswerteinrichtung 30 zusätzliche Informationen über die Position des Mobilteils 32 zur Verfügung, welche mit dem Messsignal 28 der Erfassungseinrichtung 26 abgeglichen werden können.

Durch Bewegungsanalysen auf Basis von Sensorwerten lassen sich bestimmte Tätigkeiten wie z.B. Greifen oder Ablegen eines Gegenstandes erkennen. Die Auswerteinrichtung 30 kann somit präziser abschätzen ob ein Zugriff auf einen vorgegebenen Lagerbereich 12₁ bis 12ₙ tatsächlich stattgefunden hat. Dazu kann ein vorheriges anlernen der Überwachungsvorrichtung 10 oder eine Datenverbindung zu einer Prozessüberwachung notwendig sein.

Bewegungsdetektoren ermöglichen es zusätzlich den Energiebedarf z.B. des Mobilteils 32 oder der Magnetfelderzeugungseinrichtung 14 zu senken. Beispielsweise kann für die Zeitdauer während der der Bewegungsdetektor des Mobilteils 32 keine Bewegung detektiert, Energie eingespart werden, indem z.B. nicht benötigte Komponenten, wie z.B. die Erfassungseinrichtung 26 oder die Signalquelle 16, deaktiviert werden.

Des Weiteren kann aufgrund der berechneten aktuellen Position des Mobilteils 32 denjenigen Leiterschleifen 19₁ bis 19ₘ der Leiterschleifenanordnung 18, welche sich in der Nähe des Mobilteils 32 befinden, ein erhöhtes elektrisches Wechselstromsignal 20 zugeführt werden. Dies hat den Vorteil, dass in den Leiterschleifen 19₁ bis 19ₘ der Leiterschleifenanordnung 18, die sich in der Nähe des Mobilteiles 32 befinden, ein stärkeres magnetisches Feld 22 erzeugt wird. Die Erfassungseinrichtung 26 kann dadurch einen höheren Signalpegel des magnetischen Feldes 22 erfassen. Zusätzlich kann es zu weniger Überlagerungen der ausgestrahlten magnetischen Felder 22 der verschieden Leiterschleifen 19₁ bis 19ₘ in der Leiterschleifenanordnung 18 kommen, da gewisse Leiterschleifen 19₁ bis 19ₘ geringere magnetische Felder 22 erzeugen. Zusätzlich kann dadurch die Energieeffizienz der Vorrichtung bzw. des Systems 10 erhöht werden.

Mit anderen Worten, Fig. 3 zeigt die gesamte Prozesskette 100 für das Kommissioniersystem 10 mit elektronischer Unterstützung. Die Elektronik des Kommissioniersystems 10, insbesondere des Empfängersystems 32, kann durch zusätzlich Sensorik (z.B. Vibrationssensoren, Bewegungssensoren, Inertialsensorik) erweitert werden. Dadurch erhält das System 10 zusätzliche Information über Stillstand oder Bewegung. Dies ermöglicht es dem Empfängersystem 32 Energie zu sparen da es während Ruhephasen nicht arbeiten muss. Außerdem können durch Bewegungsanalysen auf Sensorwertbasis bestimmte Tätigkeiten, wie z.B. Greifen oder Ablegen eines Gegenstandes, erkannt werden und Aktionen des Empfängersystems 32 auslösen, wie z.B. eine Überwachungssignalanalyse oder eine Datenverbindung zur Basisstation 17.

Die oben beschriebene Vorrichtung 10 zur Überwachung eines Zugriffs auf einen Lagerbereich 12₁ bis 12ₙ einer Mehrzahl von Lagerbereichen 12 für Waren ermöglicht es somit, den Kommissionierer während seiner Tätigkeit unmittelbare Rückmeldung über den korrekten Prozessablauf zu geben. Dadurch kann eine Fehlkommissionierung, d.h. Entnahme von Waren aus einem Falschen Lagerbereich 12₁ bis 12ₙ oder Ablage von Waren in einen Falschen Lagerbereich 12₁ bis 12ₙ, erkannt und signalisiert werden. Dies kann durch optische, akustische oder mechanische Signalisierung erfolgen und zwar in eine Art und Weise die nicht den eigentlichen Prozessablauf stört oder ändert.

Die Vorrichtung 10 vereinfacht somit das Kommissionieren von Waren, Objekten sowie das Sortieren von Gegenständen. Ausführungsbeispiele der Vorrichtung 10 stellen darüber hinaus eine einfache technische Lösung zur Unterstützung der Sortier- und Kommissionieraufgabe da, die zudem einfach in bestehende Arbeitsprozesse zu integrieren ist.

Neben der Überwachung von Lagerbereichen 12₁ bis 12ₙ mit Waren bei Kommissionieraufgaben kann die oben beschriebene Bereichsüberwachung mittels Leiterschleifen 19₁ bis 19ₘ und dem damit erzeugten magnetischen Feld in vielen Feldern Anwendung finden. Denkbare Anwendungen sind Zutrittsüberwachung von Sicherheitsbereichen, z.B. beim Bedienen von Maschinen mit Gefahrenzonen. Auch ist es möglich Tordurchfahrten Objekten zuzuordnen. Mit dem vorliegendem System 10 ist es außerdem möglich, die Position eines Empfängersystems 32 bezüglich eines geeignet stromdurchflossenen Leiters 19 einer Seite des Leiters (links, rechts oder direkt über dem Leiter) zuzuordnen. So ist das Auffinden eines Leiters 19 genauso wie das detektieren einer Linienüberschreitung, die dieser Leiter 19 markiert, möglich.

Im Folgenden werden die physikalischen Hintergründe beschrieben, die die Vorrichtung 10 nutzt, um die Mehrzahl von Lagerbereichen 12 zu überwachen. Dazu zählen das von einer Leiterschleife 19 bzw. einem stromdurchflossenen Leiter 19 erzeugte charakteristische magnetische Feld 22 sowie die Erfassung und Auswertung desselben.

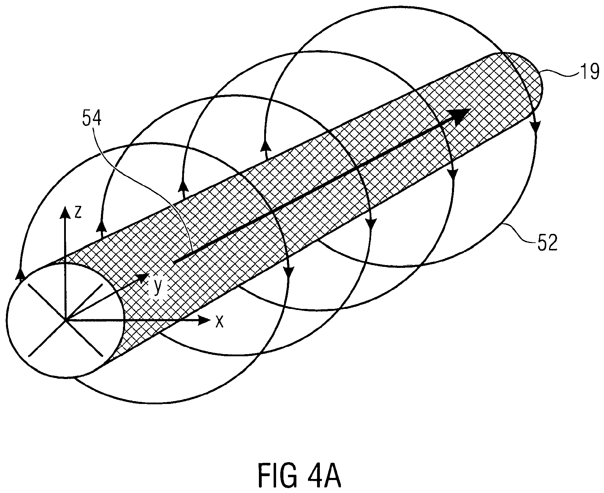

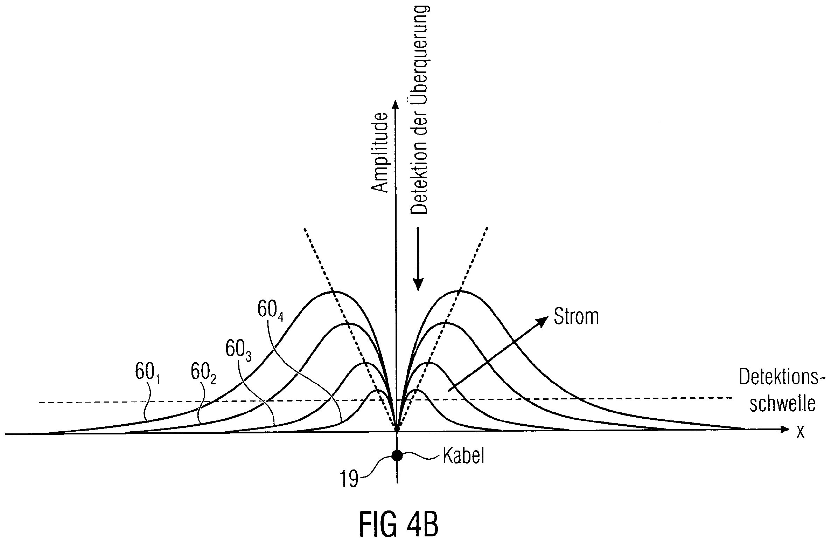

Fig. 4a zeigt eine schematische Ansicht eines stromdurchflossenen Leiters 19 und Feldlinien 52 eines magnetischen Feldes, das durch den stromdurchflossenen Leiter 19 erzeugt wird. Ferner ist in Fig. 4a ein kartesisches Koordinatensystem mit einer x-Achse, einer y-Achse und einer z-Achse zu erkennen, wobei der stromdurchflossenen Leiter 19 entlang der y-Achse angeordnet ist, so dass auch der Stromfluss in y-Richtung gerichtet ist. Es sei darauf hingewiesen, dass die in Fig. 4a gezeigte Anordnung des stromdurchflossenen Leiters 19 und Ausrichtung des durch den stromdurchflossenen Leiters 19 erzeugten magnetischen Feldes 52 in Bezug auf das kartesische Koordinatensystem auch auf die Fig. 4b bis 6b anwendbar ist.

Wie in Fig. 4a zu erkennen ist, erzeugt ein Stromfluss 54 durch den Leiter 19 ein magnetisches Feld 52 um den Leiter 19 herum. Der Stromfluss 54 durch den Leiter 19 kann z.B. durch ein symmetrisches (z.B. sinusförmiges) Wechselsignal hervorgerufen werden. Befindet sich eine Messspule bzw. Spule in diesem magnetischen Feld 52, so erzeugt bzw. induziert das magnetische Feld 52 des stromdurchflossenen Leiters 19, in Abhängigkeit von Induktivität, Güte und Lage der Messspule zu den Feldvektoren des magnetischen Feldes 52, eine Spannung in der bzw. in die Messspule.

Fig. 4b zeigt in einem Diagramm für vier verschiedene Stromstärken vier Amplitudenverläufe 58₁ bis 58₄ magnetischer Feldstärken eines magnetischen Feldes, das durch den stromdurchflossenen Leiter 19 erzeugt wird, in Abhängigkeit von einem Abstand zu dem stromdurchflossenen Leiter 19.

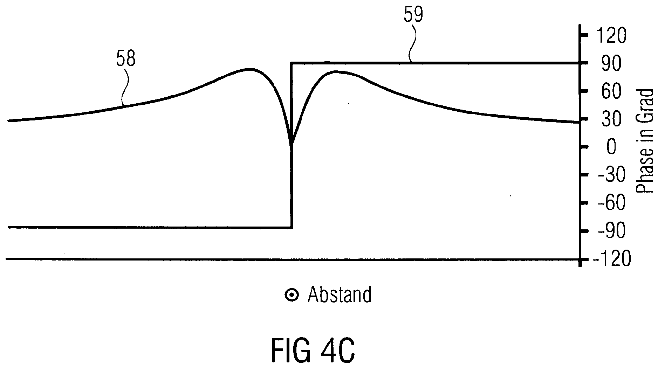

Wie in Fig. 4b zu erkennen ist, wird direkt über dem Leiter 19 theoretisch kein Signal in die Messspule induziert, wenn Leiterrichtung (Stromvektor) und Spulenachse senkrecht zueinander stehen. Bewegt sich die Messspule senkrecht (parallel zur x-Achse) von z.B. links nach rechts über den Leiter 19, so wird zunächst ein Signal mit steigender Amplitude bei Annährung an den Leiter 19 induziert. In unmittelbarer Nähe zu dem Leiter 19 durchsetzen jedoch immer weniger Feldlinien des Leiterstromes 54 die dazu senkrechte Messspule, die Amplitude des induzierten Signals nimmt wieder ab bis zu einem Minimum, bei dem die Messspule direkt über dem Leiter 19 steht. Ab diesem Punkt ist bei einer weiteren Bewegung der Messspule in gleicher Richtung (parallel zur x-Achse) wieder ein Ansteigen der induzierten Signalamplitude bis zu einem Maximum und ein darauf folgendes Absinken bei weiterer Entfernung vom Leiter 19 zu beobachten. Aufgrund des Feldlinienverlaufs 52 des Magnetfeldes um den Leiter 19 ist nun aber das induzierte Signal in der Messspule invertiert, d.h. es kommt zu einem Phasensprung, wie dies in Fig. 4c zu erkennen ist.

Fig. 4c zeigt in einem Diagramm einen Amplitudenverlauf 58 und einen Phasenverlauf 59 einer magnetischen Feldstärke eines magnetischen Feldes, das durch den stromdurchflossenen Leiter 19 erzeugt wird, aufgetragen über einen Abstand zu dem stromdurchflossenen Leiter 19.

Es sei darauf hingewiesen, dass aufgrund der Phasenlage ebenfalls ermittelt werden kann, ob der stromdurchflossene Leiter 19, wenn dieser zu einer Leiterschleife geformt wird, durchquert bzw. durchgriffen wurde oder nicht. Wenn diese Leiterschleife einem Lagerbereich zugeordnet wird kann somit unterschieden werden, ob durch die Leiterschleife hindurch in den (richtigen) Lagerbereich gegriffen wurde, oder ob danebengegriffen wurde. Der Phasenunterschied im Messsignal beträgt ca. 180° je nach dem ob man durch die Ebene greift welche die Leiterschleife aufspannt und begrenzt, oder durch die Ebene greift welche die Leiterschleife aufspannt und außerhalb der Leiterschleife bin ins Unendliche verlängert. Beim hineingreifen in den (richtigen) Lagerbereich stellt die Erfassungseinrichtung somit ein Messsignal mit einer ersten Phase bereit, während beim Danebengreifen durch die Erfassungseinrichtung ein Messsignal mit einer zweiten zu der ersten Phase invertierten Phase bereitgestellt wird. Somit kann die die Erfassungseinrichtung ausgebildet sein, um beim Durchqueren einer Fläche, die durch die Leiterschleife 19 aufgespannt wird und durch die Leiterschleife 19 begrenzt wird, ein Messsignal mit einer Phasenlage zu liefern, und beim Durchqueren (Durchgreifen) der gleichen Fläche außerhalb der Leiterschleife ein Messsignal mit einer anderen Phase zu liefern.

Durch beobachten des in Fig. 4b und 4c gezeigten Signalverlaufs in der Messspule ist der Vorgang des Überschreitens eines stromdurchflossenen Leiters 19 detektierbar. Dies setzte eine Synchronisierung von Sender und Empfänger voraus, das bedeutet der Empfänger sollte die ausgesendete Phase des Senders kennen, um den Phasensprung, der mit einem Amplitudeneinbruch einhergeht, zu erkennen. Möglichkeiten für eine solche Trägerphasenbestimmung werden im Folgenden erläutert.

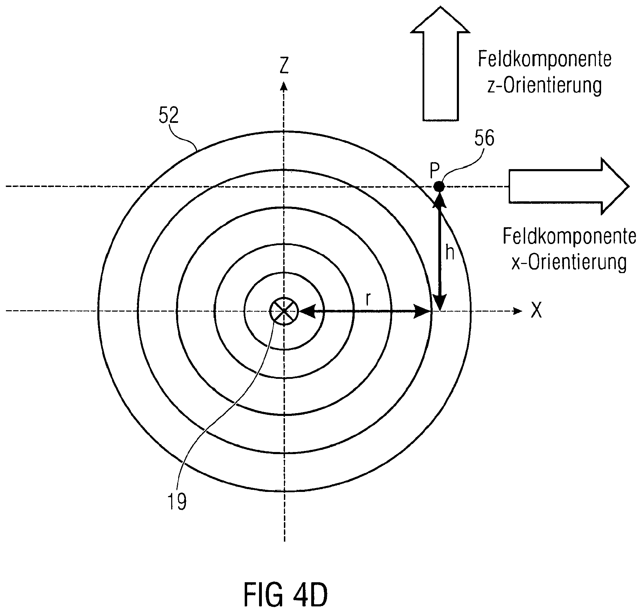

Fig. 4d zeigt eine schematische Ansicht des stromdurchflossenen Leiters 19, Feldlinien 52 eines magnetischen Feldes, das durch den stromdurchflossenen Leiter 19 erzeugt wird, und Feldkomponenten an einer Position (P) 56 in x- und z-Richtung.

Fig. 4d verdeutlich dabei, dass das von dem stromdurchflossenen Leiter 19 erzeugte magnetische Feld an der Position (P) 56 sowohl eine x-Feldkomponente (oder x-Komponente) als auch eine z-Feldkomponente (oder z-Komponente) aufweist. Die Position (P) in Bezug auf den stromdurchflossenen Leiter 19 kann dabei mittels eines Abstandes r entlang der x-Achse und eines Abstandes h entlang der z-Achse beschrieben werden.

Wie bereits erwähnt und in Fig. 4c gezeigt wurde, tritt bei der Überquerung des stromdurchflossenen Leiters 19 ein Phasensprung auf. Diese Änderung der Phasenlage kann mittels einer in das magnetische Feld eingebrachten senkrechten Messspule bestimmt werden. Die Messspule kann dabei derart angeordnet werden, dass diese eine z-Komponente des magnetischen Feldes detektiert.

Bei der Annahme eines sinusförmigen Wechselstroms durch den Leiter 19 ergibt sich ein sinusförmiger, magnetischer Fluss, welcher in der Messspule eine kosinusförmige Messspannung hervorruft, wobei der Maximalwert dieser Spannung von dem Abstand der Messspule zu dem Leiter 19 abhängt.

Bei dem Überschreiten des stromdurchflossenen Leiters 19 wird die in die Messspule induzierte Spannung invertiert (d.h. Phasenänderung um 180°). Dieser bei der Überschreitung des stromdurchflossenen Leiters 19 aufgetretener Phasensprung kann ausgewertet werden, um die Überschreitung bzw. Überquerung des stromdurchflossenen Leiters 19 zu detektieren. Dazu ist es jedoch notwendig, die Referenzphase (d.h. die aktuelle Phasenlage) zu kennen oder die Phasendifferenz zwischen zwei Spulen (d.h. Messspule und einer Referenzspule) auszuwerten.

Die Referenzphase kann beispielsweise durch einen externen Referenzsender bereitgestellt werden. Eine weitere Möglichkeit ist das direkte Aufmodulieren der Referenzphase auf das Wechselstromsignal, welches in den Leiter 19 eingespeist wird. Dabei kann die Phasenlage (der Trägerschwingung) z.B. durch Amplitudenmodulation oder Frequenzmodulation direkt mit in das Wechselstromsignal (Trägersignal) integriert werden. Dies kann z.B. durch das Teilen der Trägerfrequenz mit einem festen Faktor und anschließendes Aufmodulieren mit dieser Frequenz geschehen. Im Empfänger (Mobilteil 32) kann eine PLL (PLL = Phase Locked Loop, dt. Phasenregelschleife) auf die Modulation synchronisiert werden und eine anschließende Vervielfachung um den vorherigen Faktor stattfinden. Beim Vergleich zwischen demodulierter und tatsächlich Phase kann eine Aussage über die Phasenbeziehung zwischen ausgestrahlter und empfangener Phase getätigt werden, denn bei einer Invertierung des Trägersignals bleibt die demodulierte und vervielfachte Frequenz phasenrichtig.

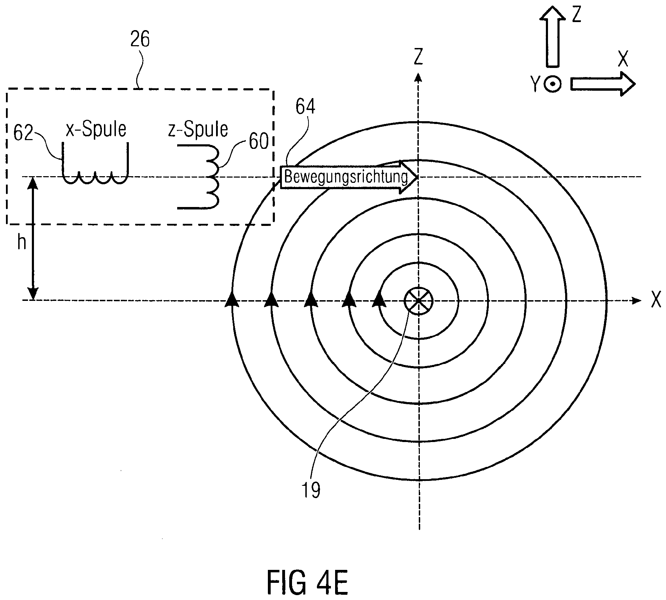

Eine weitere Möglichkeit ist, nicht die Trägerphase zu bestimmen, sondern die Phase der Messspule (z-Spule) mit einer zweiten Spule bzw. Referenzspule zu vergleichen, wie dies im Folgenden anhand von Fig. 4e erläutert wird.

Fig. 4e zeigt eine schematische Ansicht des stromdurchflossenen Leiters 19, Feldlinien 52 eines magnetischen Feldes, das durch den stromdurchflossenen Leiter 19 erzeugt wird, eine Messspule 60 zur Erfassung einer ersten Komponente des magnetischen Feldes (z.B. z-Komponente) und eine Referenzspule 62 zur Erfassung einer zweiten Komponente (z.B. x-Komponente) des magnetischen Feldes.

Ferner ist in Fig. 4e eine Bewegungsrichtung 64 der Messspule 60 und der Referenzspule 62 gezeigt, die parallel zu der x-Achse verläuft.

Das Mobilteil 32 bzw. die Erfassungseinrichtung 26 kann dabei die Messspule 60 und die Referenzspule 62 aufweisen.

Bei der Vergleichsspule oder Referenzspule 62 sollte beim Überschreiten des stromdurchflossenen Leiters 19 kein Phasensprung auftreten. Eine Möglichkeit ist es, wie in Fig. 4e gezeigt ist, die Referenzspule 62 derart anzuordnen, dass diese eine x-Komponente des magnetischen Feldes detektiert.

Das Mobilteil 32 bzw. die Erfassungseinrichtung 26 kann ferner eine zweite Referenzspule zum Detektieren einer y-Komponente des magnetischen Feldes aufweisen, um eine Drehung in der z-Achse bzw. ein Überqueren in einem sehr flachen Winkel zu erkennen. Durch eine mögliche Drehung der Messelektronik (d.h., der Messspule (z-Spule) und der Referenzspulen (x-Spule und y-Spule)) bei der Überquerung des stromdurchflossenen Leiters 19 kann sich eine Mehrdeutigkeit ergeben, da sich hierbei die Phasen in der ersten Referenzspule (x-Spule) oder der zweiten Referenzspule (y-Spule) ändern.

Fig. 4f zeigt eine schematische Ansicht des stromdurchflossenen Leiters 19, Feldlinien 52 des magnetischen Feldes, das durch den stromdurchflossenen Leiter 19 erzeugt wird, sowie in einem ersten Diagramm 70 einen Verlauf 72 einer an einer ersten Position 56 der Messspule 60 in die Messspule 60 induzierten Spannung aufgetragen über die Zeit, und in einem zweiten Diagramm 74 einen Verlauf 76 einer an einer zweiten Position 57 der Messspule 60 in die Messspule 60 induzierte Spannung aufgetragen über die Zeit. Ferner ist in dem ersten Diagramm 70 und dem zweiten Diagramm 72 ein Verlauf 78 des Stromes durch den Leiter 19 eingezeichnet.

Wie in Fig. 4f zu erkennen ist, wird je nach Position 56 oder 57 der Messspule 60, die in z-Richtung orientiert ist (siehe Fig. 4e), relativ zu dem stromdurchflossenen Leiter 19 eine andere charakteristische Spannung 72 und 76 in die Messspule 60 induziert, wenn z.B. ein unsymmetrisches Signal (Wechselstromsignal), wie z.B. ein Dreieckssignal, verwendet wird. Eine mögliche Auswertemethode in einer Schaltung ist die Zeitmessung zwischen steigenden und fallenden Flanken der in Fig. 4f gezeigten Verläufe 72 und 76 der in die Messspule 60 induzierten Spannungen.

Weiterhin ist es möglich, Signale über einen Schmitt-Trigger zu führen und anschließend durch eine Integration des induzierten Spulensignals und einem Vergleich mit einem Mittelwert des empfangenen Signals eine eindeutige Zuordnung des Spulensignals zu einer Leiterseite zu treffen da sich aufgrund des Phasensprungs auf der einen Leiterseite (z.B. erste Position 56) ein kleinerer Integrationswert als auf der anderen Leiterseite (z.B. zweite Position 57) ergibt.

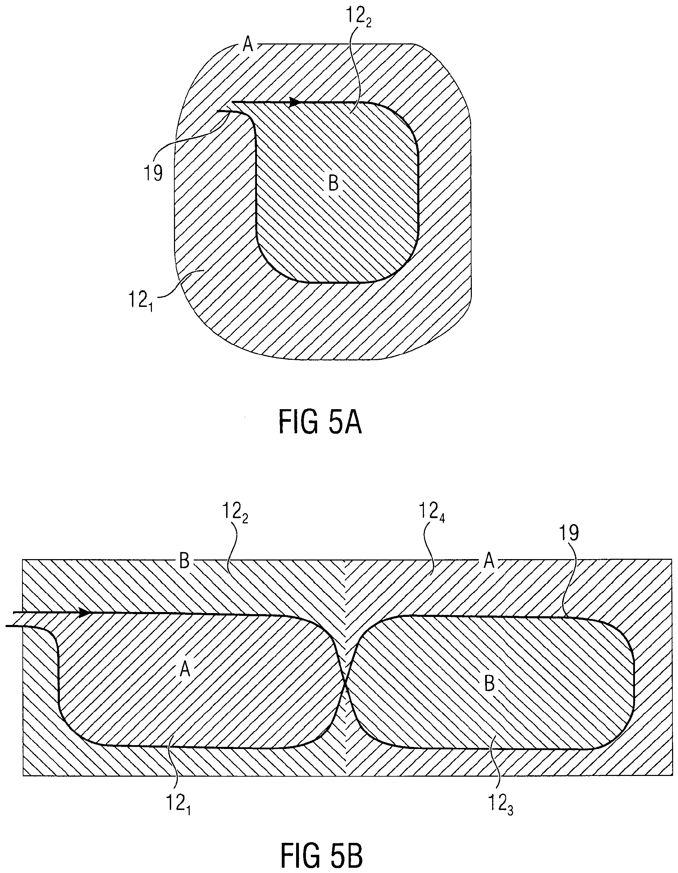

Fig. 5a zeigt eine schematische Ansicht einer Anordnung einer Leiterschleife 19, gemäß einem Ausführungsbeispiel. Die in Fig. 5a gezeigte Leiterschleife 19 weist zwei Überwachungsbereiche 12₁ (A) und 12₂ (B) auf. Ein erster (äußerer) Überwachungsbereich 12₁ (A) der zwei Überwachungsbereiche 12₁ (A) und 12₂ (B) kann außerhalb der Leiterschleife 19 liegen. Ein zweiter (innerer) Überwachungsbereich 12₂ (B) kann von der Leiterschleife 19 (annährend) vollständig umschlossen sein. Die Leiterschleife 19 kann dabei eine beliebige Form aufweisen, wie z.B. eine runde, dreieckige oder viereckige Form.

Fig. 5b zeigt eine schematische Ansicht einer 8-förmigen Anordnung einer Leiterschleife 19 der Leiterschleifenanordnung 18, gemäß einem Ausführungsbeispiel. Die Leiterschleife 19 weist vier Überwachungsbereiche 12₁ bis 12₄ auf. Ein erstes Paar von Überwachungsbereichen 12₁ und 12₃ der vier Überwachungsbereiche 12₁ bis 12₄ werden von der Leiterschleife 19 umschlossen, während ein zweites Paar von Überwachungsbereichen 12₂ und 12₄ der vier Überwachungsbereiche 12₁ bis 12₄ außerhalb der Leiterschleife 19 liegen. Die Phasenlage der Überwachungsbereiche 12₁ und 12₄ (A) und die Phasenlage der Überwachungsbereiche 12₂ und 12₃ (B) stimmt überein, wobei die Phasenlage zwischen den beiden umschlossenen Überwachungsbereichen 12₁ und 12₃ sowie der beiden äußeren Überwachungsbereichen 12₂ und 12₄ jeweils entgegengesetzt ist.

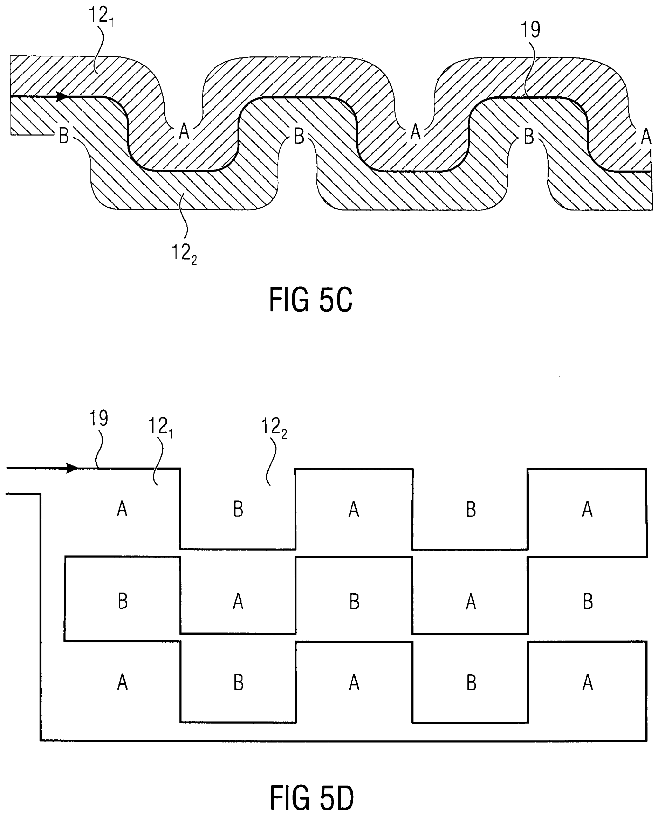

Fig. 5c zeigt eine schematische Ansicht einer meanderförmigen Anordnung einer Leiterschleife 19, gemäß einem Ausführungsbeispiel. Wie in Fig. 5c zu erkennen ist, wechseln sich der erste und zweite Überwachungsbereich 12₁ und 12₂ entlang der Anordnung der meanderförmigen Leiterschleife 19 ab. Durch diese Anordnung ist es möglich, Linearbewegungen entlang der Anordnung der meanderförmigen Leiterschleife 19 zu überwachen. Mit jedem Überqueren der Leiterschleife 19 weist die in die Messspule 60 induzierte Spannung einen Phasenwechsel auf, welcher durch das Mobilteil 32 ausgewertet werden kann, um eine Bewegung des Mobilteils 32 zu überwachen.

Ferner können Abstände zwischen gegenüberliegenden Abschnitten (oder Teilen) der Leiterschleife 19 entlang der meanderförmigen Anordnung der Leiterschleife 19, oder mit anderen Worten, eine enge bzw. weite meanderfömige Anordnung der Leiterschleife 19, eine zusätzliche Information repräsentieren. Beispielsweise kann die durch den Abstand repräsentierte Information mit einem Mobilteil ausgelesen werden, dass sich mit (annährend) konstanter Geschwindigkeit entlang der meanderförmigen Anordnung der Leiterschleife 19 bewegt.

Fig. 5d zeigt eine schematische Ansicht einer schachbrettförmigen Anordnung einer Leiterschleife 19, gemäß einem Ausführungsbeispiel. Die Überwachungsbereiche 12₁ (A) und 12₂ (B) können, wie bereits in Bezug auf Fig. 5b und 5c beschrieben wurde, zwei Zustände bezüglich der Phasenlage 64 annehmen. Jeweils aneinander angrenzende Überwachungsbereiche 12₁ (A) und 12₂ (B) weisen unterschiedliche Phasenlagen auf.

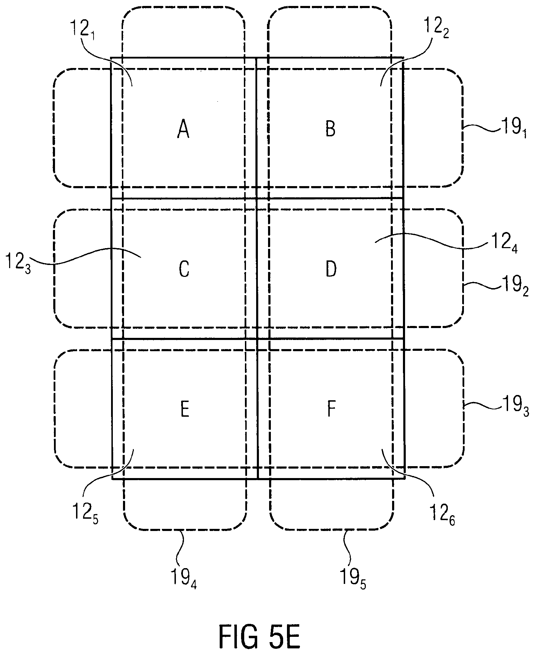

Fig. 5e zeigt eine schematische Ansicht von sechs Lagerbereichen 12₁ bis 12₆ und einer Leiterschleifenanordnung 18 mit fünf Leiterschleifen 19₁ bis 19₅ zur Überwachung der sechs Lagerbereiche 12₁ bis 12₆, gemäß einem Ausführungsbeispiel. Die sechs Lagerbereiche 12₁ bis 12₆ sind dabei (matrixförmig) in zwei Spalten und drei Zeilen angeordnet. Eine erste Leiterschleife 19₁ der fünf Leiterschleifen 19₁ bis 19₅ ist angeordnet, um eine erste Zeile der drei Zeilen zu umfassen, während eine zweite Leiterschleife 19₂ der fünf Leiterschleifen 19₁ bis 19₅ angeordnet ist, um eine zweite Zeile der drei Zeilen zu umfassen, und während eine dritte Leiterschleife 19₃ der fünf Leiterschleifen 19₁ bis 19₅ angeordnet ist, um eine dritte Zeile der drei Zeilen zu umfassen. Eine vierte Leiterschleife 19₄ der fünf Leiterschleifen 19₁ bis 19₅ ist angeordnet, um eine erste Spalte der zwei Spalten zu umfassen, während eine fünfte Leiterschleife 19₅ der fünf Leiterschleifen 19₁ bis 19₅ angeordnet ist, um eine zweite Spalte der zwei Spalten zu umfassen.

Zusammenfassend zeigen Fig. 5a bis 5e mögliche Anordnungen der Leiterschleifen 19 der Leiterschleifenanordnung 18. Wie in Fig. 5a gezeigt ist, könnte der Leiter 19 zur Überwachung von Linearbewegungen auch als Meanderstruktur ausgeführt sein. Im Falle der Anwendung der Kommissionsüberwachung können mehrere Leiter 19 mit unterschiedlichen Signalen (unterschiedliche Frequenz oder Modulation) zu Schleifen 19 geformt werden um mehrere Lagerbereiche 12₁ bis 12ₙ voneinander zu unterscheiden (siehe Fig. 5b und 5d). Eine Kombination der Schleifen 19₁ bis 19ₘ, z.B. in einer Matrixanordnung (siehe Fig. 5e), kann dieses System erweitern. Im einfachsten Fall kann zur Überwachung von zwei Bereichen 12₁ bis 12ₙ (n = 2) aus einem Leiter 19 eine 8-förmige Schleife geformt werden, die die zwei zu überwachenden Lagerbereiche 12₁ bis 12ₙ (n = 2) eingrenzt.

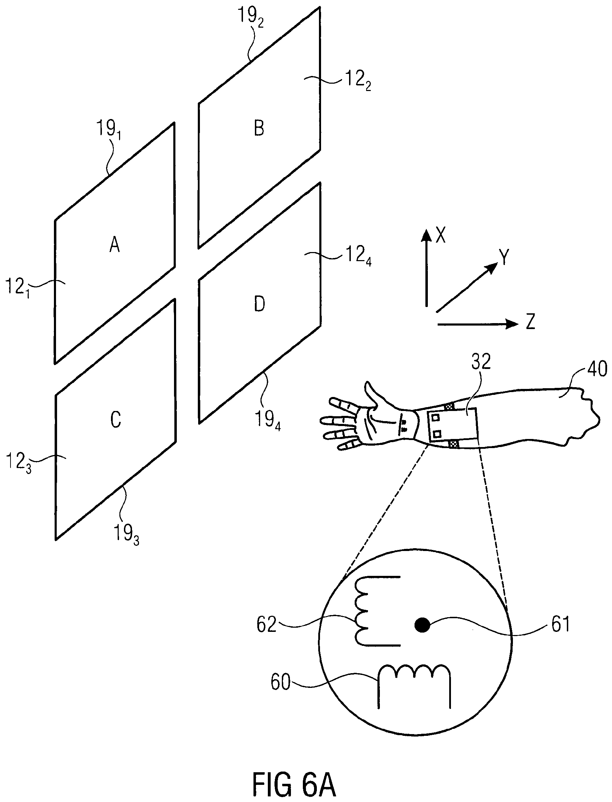

Fig. 6a zeigt eine schematische Ansicht einer Leiterschleifenanordnung 18 mit vier Leiterschleifen 19₁ bis 19₄ zur Überwachung von vier Lagerbereichen 12₁ bis 12ₙ (A bis D). Die vier Leiterschleifen 19₁ bis 19₄ können rechteckförmig ausgebildet sein und (matrixförmig) in zwei Zeilen und zwei Spalten angeordnet sein, wobei die vier Leiterschleifen 19₁ bis 19₄ parallel zur einer x-y-Ebene des kartesischen Koordinatensystems angeordnet sein können.

Die Erfassungseinrichtung 26 des Mobilteils 32 kann dabei zur Lage- und Richtungserkennung drei Spulen 60, 61 und 62 aufweisen, die orthogonal zueinander angeordnet sind. Mit anderen Worten, die Erfassungseinrichtung 26 kann drei orthogonale Spulen 60, 61 und 62 in x-, y- und z-Richtung zur Lage- und Richtungserkennung aufweisen.

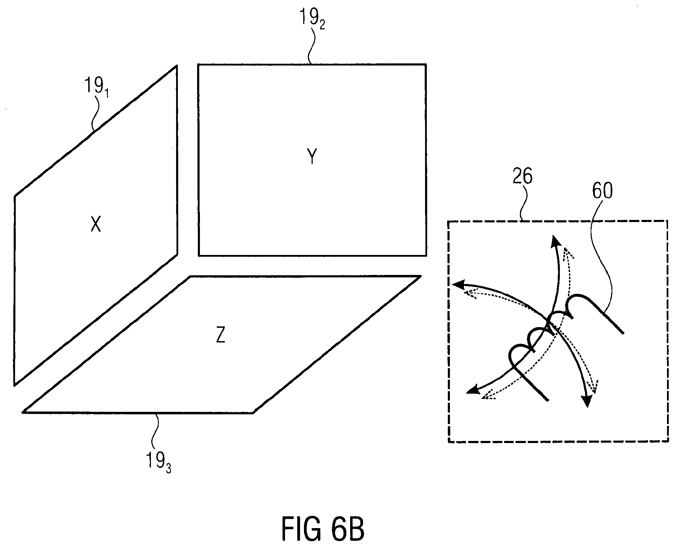

Fig. 6b zeigt eine schematische Ansicht von drei Leiterschleifen 19₁ bis 19₃ und einer Erfassungseinrichtung 26 eines Mobilteils 32, die eine Spule 60 aufweist. Mit anderen Worten, Fig. 6b zeigt eine Orientierungsschätzung mit drei erregenden Schleifen 19₁ bis 19₁ und einer Sensorspule 60.

Die drei Leiterschleifen 19₁ bis 19₃ können dabei rechteckförmig sein und orthogonal zueinander angeordnet sein, d.h. durch die drei Leiterschleifen 19₁ bis 19₃ aufgespannte Ebenen sind orthogonal zueinander angeordnet.

Mit anderen Worten, es können sowohl Empfangsspule als auch Leiter/Leiterschleife für alle Raumrichtungen ausgeführt werden. Einerseits ist die Orientierungsschätzung durch drei orthogonale Sensorspulen 60, 61 und 62 wie in Fig. 6a gezeigt möglich, oder andererseits auch durch drei orthogonale Erregerspulen 19₁ bis 19₃ und einer Sensorspule 60 wie in Fig. 6b gezeigt.

Die oben beschriebenen Ausführungen ermöglichen es die Position eines Empfängersystems 32 gegenüber einem stromdurchflossenen Leiter 19 bzw. einer stromdurchflossenen Leiterschleife 19 absolut zu bestimmen. Dadurch ist es möglich exakte Positionsauswertungen auf funktechnischer Basis durchzuführen ohne dass weitere Referenzsignale nötig sind. Insbesondere kann dies genutzt werden, um beim Kornmissionieren (mit der oben beschriebenen Vorrichtung 10) zu überprüfen ob der Kommissionierer in den richten Lagerbereich 12 (z.B. ins richtige Lagerfach) gegriffen hat oder nicht.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eine Hardware-Apparats), wie zum Beispiel einen Mikroprozessor, einen programmierbaren Computer oder eine elektronische Schaltung. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Vorrichtung (10) zur Überwachung eines Zugriffs auf einen Lagerbereich einer Mehrzahl von Lagerbereichen (12) für Waren, wobei die Vorrichtung (10) folgende Merkmale aufweist:
eine Messsignalerzeugungseinrichtung (14), die eine Signalquelle (16) und eine Leiterschleifenanordnung (18) aufweist, wobei die Leiterschleifenanordnung (18) derart angeordnet ist, um aufgrund eines elektrischen Wechselstromsignals (20) ein magnetisches Feld (22) zu erzeugen, wobei jedem der Lagerbereiche (12) zumindest eine Leiterschleife (19) der Leiterschleifenanordnung (18) zugeordnet ist, und wobei die Signalquelle (16) ausgebildet ist, um jeder Leiterschleife (19) der Leiterschleifenanordnung (18) ein charakteristisches elektrisches Wechselstromsignal (20) zuzuführen;
eine Erfassungseinrichtung (26) zum Erfassen des erzeugten magnetischen Feldes (22) und zum Bereitstellen eines Messsignals (28) basierend auf dem erfassten magnetischen Feld (22); und
eine Auswerteinrichtung (30) zum Auswerten des von der Erfassungseinrichtung (26) bereitgestellten Messsignals (28), wobei die Auswerteeinrichtung (30) ausgebildet ist, um basierend auf dem Messsignal (28) einen Zugriff auf einen der Lagerbereiche (12) zu ermitteln, um einen ermittelten Zugriff mit einem Sollzugriff zu vergleichen, und um basierend auf dem Vergleich ein Anzeigesignal (34) auszugeben.

2. Vorrichtung (10) nach dem vorherigen Anspruch, wobei zumindest zwei Leiterschleifen (19) der Leiterschleifenanordnung (18) unterschiedliche Wechselstromsignale (22) zugeordnet sind.

3. Vorrichtung (10) nach einem der vorherigen Ansprüche, wobei das Anzeigesignal (34) einen ersten Zustand anzeigt, wenn der Vergleich ergibt, dass der Sollzugriff und der erfasste Zugriff übereinstimmen, und wobei das Anzeigesignal (34) einen zweiten Zustand anzeigt, wenn der Vergleich ergibt, dass der Sollzugriff und der erfasste Zugriff nicht übereinstimmen.

4. Vorrichtung (10) nach einem der vorherigen Ansprüche, wobei das Anzeigesignal (34) ein optisches Signal, ein akustisches Signal, ein haptisches Signal oder ein mechanisches Signal ist.

5. Vorrichtung (10) nach einem der vorherigen Ansprüche, wobei die Auswertung des Messsignals (28) ergibt, ob sich die Erfassungseinrichtung (32) innerhalb oder außerhalb der Leiterschleife (19) befindet.

6. Vorrichtung (10) nach einem der vorherigen Ansprüche, wobei die Auswerteeinrichtung (30) ausgebildet ist, um eine Amplitude und/oder eine Phasenlage des Messsignals (28) zu detektieren, um die Position der Erfassungseinrichtung (26) gegenüber der Leiterschleife (19) zu bestimmen.

7. Vorrichtung (10) nach Anspruch 6, wobei die Auswerteeinrichtung (32) ausgebildet ist, um ein Durchqueren einer Fläche, die durch die Leiterschleife (19) aufgespannt wird und durch die Leiterschleife (19) begrenzt wird, anhand einer Phasenlage des Messsignals zu detektieren, wobei das Messsignal beim Durchqueren der ersten Fläche eine erste Phasenlage aufweist, und wobei das Messsignal beim Durchqueren einer zweiten Fläche, die durch die Leiterschleife (19) aufgespannt wird und die die erste Fläche umgibt, eine zweite Phasenlage, ungleich der ersten Phasenlage, aufweist.

8. Vorrichtung (10) nach einem der vorherigen Ansprüche, wobei durch eine meanderförmige Anordnung der Leiterschleife (19) eine Linearbewegung der Erfassungseinrichtung (32) detektierbar ist.

9. Vorrichtung (10) nach einem der vorherigen Ansprüche, wobei das elektrische Wechselstromsignal (20) ein asymmetrisches Signal ist.

10. Vorrichtung (10) nach einem der vorherigen Ansprüche, wobei das elektrische Wechselstromsignal (20) ein ungleichschenkliges oder unsymmetrisches Dreiecksignal ist.

11. Vorrichtung (10) nach einem der vorherigen Ansprüche, wobei die Messsignalerzeugungseinrichtung (14) ausgebildet ist, um jeder Leiterschleife (19) der Leiterschleifenanordnung (18) ein amplitudenmoduliertes, frequenzmoduliertes oder phasenmoduliertes elektrisches Wechselstromsignal (20) zuzuführen.

12. Vorrichtung (10) nach Anspruch 11, Messsignalerzeugungseinrichtung (14) ausgebildet ist, um zumindest zwei Leiterschleifen (19) der Leiterschleifenanordnung (18) Wechselstromsignale (22) derart zuzuführen, dass die Wechselstromsignale durch die Modulation unterscheidbar sind.

13. Vorrichtung (10) nach einem der vorherigen Ansprüche, wobei die Vorrichtung (10) einen Vibrationssensor, Bewegungssensor und/oder Inertialsensor aufweist, der ausgebildet ist, um eine Bewegung der Erfassungseinrichtung (32) zu erfassen, und wobei die Vorrichtung ausgebildet ist, um basierend auf der erfassten Bewegung der Erfassungseinrichtung (32) ein Greifen oder Ablegen der Ware zu erkennen.

14. Vorrichtung (10) nach einem der vorherigen Ansprüche, wobei mehrere mindestens teilweise übereinander liegende Leiterschleifen (19) angeordnet sind, welche von unterschiedlichen elektrischen Wechselstromsignalen (20) gespeist werden.

15. Vorrichtung (10) nach einem der vorherigen Ansprüche, wobei drei Leiterschleifen (19) im Wesentlichen orthogonal zueinander angeordnet sind, um einen Zugriff im dreidimensionalen Raum zu erfassen.

16. Vorrichtung (10) nach einem der vorherigen Ansprüche, wobei die Erfassungseinrichtung (26) zumindest zwei Messspulen (60, 62) zum Erfassen des erzeugten magnetischen Feldes (22) aufweist, wobei die zumindest zwei Messspulen (60, 62) im Wesentlichen orthogonal zueinander angeordnet sind.

17. Verfahren zur Überwachung eines Zugriffs auf einen Lagerbereich einer Mehrzahl von Lagerbereichen (12) für Waren, wobei jedem Lagerbereich (12) zumindest eine Leiterschleife (19) einer Leiterschleifenanordnung (18) zugeordnet ist, wobei die Leiterschleifenanordnung (18) derart angeordnet ist, um aufgrund eines elektrischen Wechselstromsignals (20) ein magnetisches Feld (22) zu erzeugen, wobei das Verfahren aufweist:
Zuführen eines charakteristischen elektrischen Wechselstromsignals (20) zu jeder Leiterschleife (19) der Leiterschleifenanordnung (18), um das magnetische Feld (22) zu erzeugen;
Erfassen des magnetischen Feldes (22) und Bereitstellen eines Messsignals (28) basierend auf dem erfassten magnetischen Feld (22); und
Auswerten des bereitgestellten Messsignals (28), um basierend auf dem Messsignal (28) einen Zugriff auf einen der Lagerbereiche (12) zu ermitteln, um einen ermittelten Zugriff mit einem Sollzugriff zu vergleichen, und um basierend auf dem Vergleich ein Anzeigesignal (34) auszugeben.

18. Computerprogramm mit einem Programmcode zur Durchführung des Verfahrens nach Anspruch 17 wenn das Computerprogramm auf einem Computer abläuft.

## Claims

1. Device (10) for monitoring access to a storage area of a plurality of storage areas (12) for goods, the device (10) comprising:
measurement signal generation means (14) comprising a signal source (16) and a conductor loop arrangement (18), the conductor loop arrangement (18) being arranged to generate a magnetic field (22) on account of an electrical AC signal (20), each of the storage areas (12) having at least one conductor loop (19) of the conductor loop arrangement (18) associated with it, and the signal source (16) being configured to supply a characteristic electrical AC signal (20) to each conductor loop (19) of the conductor loop arrangement (18);
detection means (26) for detecting the generated magnetic field (22) and for providing a measurement signal (28) on the basis of the detected magnetic field (22); and
evaluation means (30) for evaluating the measurement signal (28) provided by the detection means (26), the evaluation means (30) being configured to determine an instance of access to one of the storage areas (12) on the basis of the measurement signal (28), to compare a determined instance of access with a target access instance, and to output a display signal (34) on the basis of the comparison.

2. Device (10) as claimed in the previous claim, wherein at least two conductor loops (19) of the conductor loop arrangement (18) have different AC signals (22) associated with them.

3. Device (10) as claimed in any of the previous claims, wherein the display signal (34) displays a first state when the comparison shows that the target access instance and the detected access instance coincide, and wherein the display signal (34) displays a second state when the comparison shows that the target access instance and the detected access instance do not coincide.

4. Device (10) as claimed in any of the previous claims, wherein the display signal (34) is an optical signal, an acoustic signal, a haptic signal, or a mechanical signal.

5. Device (10) as claimed in any of the previous claims, wherein the evaluation of the measurement signal (28) shows whether the detection means (32) is located within or outside the conductor loop (19).

6. Device (10) as claimed in any of the previous claims, wherein the evaluation means (30) is configured to detect an amplitude and/or a phase position of the measurement signal (28) so as to determine the position of the detection means (26) in relation to the conductor loop (19).

7. Device (10) as claimed in claim 6, wherein the evaluation means (32) is configured to detect crossing-through of a surface, which is spanned by the conductor loop (19) and demarcated by the conductor loop (19), by means of a phase position of the measurement signal, the measurement signal comprising a first phase position when the first surface is crossed through, and the measurement signal comprising a second phase position that is different from the first phase position when a second surface, which is spanned by the conductor loop (19) and surrounds the first surface, is crossed through.

8. Device (10) as claimed in any of the previous claims, wherein a linear movement of the detection means (32) is detectable by a meandering arrangement of the conductor loop (19).

9. Device (10) as claimed in any of the previous claims, wherein the electrical AC signal (20) is an unbalanced signal.

10. Device (10) as claimed in any of the previous claims, wherein the electrical AC signal (20) is an unequal or an unbalanced triangular signal.

11. Device (10) as claimed in any of the previous claims, wherein the measurement signal generation means (14) is configured to supply an amplitude-modulated, frequency-modulated, or phase-modulated electrical AC signal (20) to each conductor loop (19) of the conductor loop arrangement (18).

12. Device (10) as claimed in claim 11, measurement signal generation means (14) is configured to supply AC signals (22) to at least two conductor loops (19) of the conductor loop arrangement (18) such that the AC signals can be distinguished by means of the modulation.

13. Device (10) as claimed in any of the previous claims, the device (10) comprising a vibration sensor, motion sensor, and/or inertial sensor configured to detect a movement of the detection means (32), and the device being configured to identify a seizing or depositing of the goods on the basis of the detected movement of the detection means (32).

14. Device (10) as claimed in any of the previous claims, wherein several conductor loops (19) that are at least partly superimposed on one another are arranged which are fed by different electrical AC signals (20).

15. Device (10) as claimed in any of the previous claims, wherein three conductor loops (19) are arranged essentially orthogonally to one another so as to detect an access instance in three-dimensional space.

16. Device (10) as claimed in any of the previous claims, wherein the detection means (26) comprises at least two measuring coils (60, 62) for detecting the generated magnetic field (22), the at least two measuring coils (60, 62) being arranged essentially orthogonally to one another.

17. Method of monitoring access to a storage area of a plurality of storage areas (12) for goods, wherein each storage area (12) has at least one conductor loop (19) of a conductor loop arrangement (18) associated with it, the conductor loop arrangement (18) being arranged to generate a magnetic field (22) on account of an electrical AC signal (20), the method comprising:
supplying a characteristic electrical AC signal (20) to each conductor loop (19) of the conductor loop arrangement (18) so as to generate the magnetic field (22);
detecting the magnetic field (22) and providing a measurement signal (28) on the basis of the detected magnetic field (22); and
evaluating the provided measurement signal (28) so as to determine an instance of access to one of the storage areas (12) on the basis of the measurement signal (28), to compare a determined instance of access to a target access instance, and to output a display signal (34) on the basis of the comparison.

18. Computer program having a program code for performing the method as claimed in claim 17, when the computer program runs on a computer.

## Revendications

1. Dispositif (10) de surveillance d'un accès à une zone de stockage d'une pluralité de zones de stockage (12) de marchandises, le dispositif (10) présentant les caractéristiques suivantes:
un moyen de génération de signal de mesure (14) présentant une source de signaux (16) et un aménagement de boucles de câble (18), l'aménagement de boucles de câble (18) étant aménagé de manière à générer un champ magnétique (22) sur base d'un signal de courant électrique alternatif (20), à chacune des zones de stockage (12) étant associé au moins une boucle de câble (19) de l'aménagement de boucles de câble (18), et la source de signal (16) étant réalisée pour alimenter vers chaque boucle de câble (19) de l'aménagement de boucles de câble (18) un signal de courant électrique alternatif caractéristique (20);
un moyen de détection (26) destiné à détecter le champ magnétique généré (22) et à mettre à disposition un signal de mesure (28) sur base du champ magnétique détecté (22); et
un moyen d'évaluation (30) destiné à évaluer le signal de mesure (28) mis à disposition par le moyen de détection (26), le moyen d'évaluation (30) étant réalisé pour déterminer, sur base du signal de mesure (28), un accès à l'une des zones de stockage (12), pour comparer un accès déterminé avec un accès cible, et pour sortir, sur base de la comparaison, un signal d'indication (34).

2. Dispositif (10) selon la revendication précédente, dans lequel au moins à deux boucles de câble (19) de l'aménagement de boucles de câble (18) sont associés des signaux de courant alternatif (22) différents.

3. Dispositif (10) selon l'une des revendications précédentes, dans lequel le signal d'indication (34) indique un premier état lorsque la comparaison a pour résultat que l'accès cible et l'accès détecté coïncident, et dans lequel le signal d'indication (34) indique un deuxième état lorsque la comparaison a pour résultat que l'accès cible et l'accès détecté ne coïncident pas.

4. Dispositif (10) selon l'une des revendications précédentes, dans lequel le signal d'indication (34) est un signal optique, un signal acoustique, un signal tactile ou un signal mécanique.

5. Dispositif (10) selon l'une des revendications précédentes, dans lequel l'évaluation du signal de mesure (28) indique que le moyen de détection (32) se trouve à l'intérieur ou à l'extérieur de la boucle de câble (19).

6. Dispositif (10) selon l'une des revendications précédentes, dans lequel le dispositif d'évaluation (30) est réalisé pour détecter une amplitude et/ou une position de phase du signal de mesure (28), pour déterminer la position du moyen de détection (26) par rapport à la boucle de câble (19).

7. Dispositif (10) selon la revendication 6, dans lequel le moyen d'évaluation (32) est réalisé pour détecter, à l'aide d'une position de phase du signal de mesure, un passage à travers une surface qui est définie par la boucle de câble (19) et limitée par la boucle de câble (19), le signal de mesure présentant, lors du passage à travers de la première surface, une première position de phase, et le signal de mesure présentant, lors du passage à travers une deuxième surface qui est définie par la boucle de câble (19) et qui entoure la première surface, une deuxième position de phase différente de la première position de phase.

8. Dispositif (10) selon l'une des revendications précédentes, dans lequel peut être détecté par un aménagement en forme de méandre de la boucle de câble (19) un mouvement linéaire du moyen de détection (32).

9. Dispositif (10) selon l'une des revendications précédentes, dans lequel le signal de courant électrique alternatif (20) est un signal asymétrique.

10. Dispositif (10) selon l'une des revendications précédentes, dans lequel le signal de courant électrique alternatif (20) est un signal triangulaire non isocèle ou asymétrique.

11. Dispositif (10) selon l'une des revendications précédentes, dans lequel le moyen de génération de signal de mesure (14) est réalisé pour alimenter vers chaque boucle de câble (19) de l'aménagement de boucles de câble (18) un signal de courant alternatif électrique modulé en amplitude, modulé en fréquence ou modulé en phase (20).

12. Dispositif (10) selon la revendication 11, dans lequel le moyen de génération de signal de mesure (14) est réalisé pour alimenter vers au moins deux boucles de câble (19) de l'aménagement de boucles de câble (18) des signaux de courant alternatif (22) de sorte que les signaux de courant alternatif puissent être différenciés par la modulation.

13. Dispositif (10) selon l'une des revendications précédentes, dans lequel le dispositif (10) présente un capteur de vibration, un capteur de mouvement et/ou un capteur d'inertie qui est réalisé pour détecter un mouvement du moyen de détection (32), et dans lequel le dispositif est réalisé pour reconnaître, sur base du mouvement détecté du moyen de détection (32), une saisie ou un dépôt des marchandises.

14. Dispositif (10) selon l'une des revendications précédentes, dans lequel sont disposées de manière au moins partiellement superposée plusieurs boucles de câble (19) qui sont alimentées par des signaux de courant électrique alternatif (20) différents.

15. Dispositif (10) selon l'une des revendications précédentes, dans lequel trois boucles de câble (19) sont disposées sensiblement perpendiculaires entre elles, pour détecter un accès dans l'espace tridimensionnel.

16. Dispositif (10) selon l'une des revendications précédentes, dans lequel le moyen de détection (26) présente au moins deux bobines de mesure (60, 62) pour détecter le champ magnétique généré (22), dans lequel les au moins deux bobines de mesure (60, 62) sont disposées de manière sensiblement orthogonale entre elles.

17. Procédé de surveillance d'un accès à une zone de stockage d'une pluralité de zones de stockage (12) de marchandises, dans lequel à chaque zone de stockage (12) est associée au moins une boucle de câble (19) d'un aménagement de boucles de câble (18), dans lequel l'aménagement de boucles de câble (18) est disposé de sorte à générer un champ magnétique (22) sur base d'un signal de courant électrique alternatif (20), le procédé présentant le fait de:
alimenter un signal de courant électrique alternatif caractéristique (20) vers chaque boucle de câble (19) de l'aménagement de boucles de câble (18) pour générer le champ magnétique (22);
détecter le champ magnétique (22) et mettre à disposition un signal de mesure (28) sur base du champ magnétique détecté (22); et
évaluer le signal de mesure (28) mis à disposition pour déterminer, sur base du signal de mesure (28), un accès à l'une des zones de stockage (12) pour comparer un accès déterminé avec un accès cible, et pour sortir, sur base de la comparaison, un signal indicateur (34).

18. Programme d'ordinateur avec un code de programme pour réaliser le procédé selon la revendication 17 lorsque le programme d'ordinateur est exécuté sur un ordinateur.
